(19) Europäisches Patentamt
European Patent Office
Office européen des brevets

(11) EP 3 074 493 B1

(12) EUROPEAN PATENT SPECIFICATION

(45) Date of publication and mention
of the grant of the patent:
**09.01.2019 Bulletin 2019/02**

(21) Application number: **14806710.1**

(22) Date of filing: **28.11.2014**

(51) Int Cl.:
***C11B 3/02*** *(2006.01)* ***C11B 3/06*** *(2006.01)*

(86) International application number:
**PCT/GB2014/053553**

(87) International publication number:
**WO 2015/079262 (04.06.2015 Gazette 2015/22)**

(54) **REMOVAL OF FREE FATTY ACIDS FROM GLYCERIDE OILS**

ENTFERNUNG VON FREIEN FETTSÄUREN AUS GLYCERIDÖLEN

ÉLIMINATION D'ACIDES GRAS LIBRES D'HUILES GLYCÉRIDIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2013 GB 201321033**

(43) Date of publication of application:
**05.10.2016 Bulletin 2016/40**

(73) Proprietor: **The Queen's University Of Belfast**
**Belfast, Antrim BT7 1NN (GB)**

(72) Inventors:
- **ATKINS, Martin**
  **Belfast**
  **Antrim BT9 5AG (GB)**
- **COLEMAN, Fergal**
  **Belfast**
  **Antrim BT9 5AG (GB)**
- **GOODRICH, Peter**
  **Belfast**
  **Antrim BT7 1NN (GB)**

(74) Representative: **Hamer, Christopher K. et al**
**Mathys & Squire LLP**
**The Shard**
**32 London Bridge Street**
**London SE1 9SG (GB)**

(56) References cited:
**EP-A1- 1 911 829**
**WO-A1-2010/136783**
**GB-A- 764 833**
**US-A- 4 915 876**
**US-A1- 2011 207 953**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 074 493 B1

## Description

The present invention relates to a process for the removal of free fatty acids from glyceride oils, especially palm oil. In particular, the present invention is directed to a process wherein specific ionic liquids are utilised for removing free fatty acids contained in glyceride oils, preferably palm oil, such that a glyceride oil, having a reduced content of free fatty acids may be obtained. The invention also relates to treated glyceride oil compositions, preferably treated palm oil compositions, comprising certain ionic liquids to prevent build-up of free fatty acids in stored oil.

There are a plethora of glyceride oils that may be extracted from natural sources for human or animal consumption, or for other domestic and commercial uses. Such glyceride oils include, for example, vegetable oils, marine oils and animal fats and oils. Typically, it is necessary for glyceride oils to undergo refining before their use, which can vary depending on the particular oil and the associated level and nature of any contamination following extraction.

Palm oil is a vegetable oil derived primarily from the fruit of oil palms and is composed of a number of fatty acids, including palmitic and oleic acids, which are esterified with glycerol. Palm oil has numerous applications and is commonly associated with use in food preparation or as a food additive, whilst it has also found use in cosmetics and cleaning products. Crude palm oil is known to contain vitamin E and is also one of the richest natural plant sources of carotenes, associated with pro-vitamin A activities, and has seen palm oil used as a source of antioxidants.

Palm oil contains a large amount of highly saturated fats, has a high oxidative stability and is naturally low in cholesterol and, partly due to its low cost, is being used increasingly in the food industry as a substitute for trans-unsaturated fats in certain processed food products. As with other glyceride oils, in order to be rendered edible, crude palm oil must undergo a refining process to remove unwanted components. Crude palm oil comprises mono-, di- and tri-glycerides, carotenes, sterols, as well as free fatty acids (FFA), which are not esterified with glycerol to any extent. FFA lead to degradation of the oil and an increase in rancidity and is thus one of a number of components that the refining process seeks to remove from the crude palm oil. Although refining processes may substantially remove FFA from palm oil, long term storage of refined palm oil is known to lead to replenished levels of FFA, as a result of the oxidative and hydrolytic instability of the oil.

In the refining process, crude palm oil typically undergoes a degumming pretreatment with phosphoric acid and/or citric acid to remove impurities and other unwanted substances before being deacidified to remove FFA. Often, refining also includes bleaching (e.g. with bleaching earth) and deodorisation steps before the refined palm oil is considered fit for distribution. The deacidification process is known to have a substantial economic impact on the production of refined palm oil and several different chemical and physical methods for deacidification have been utilized in the past.

Chemical methods include treatment of crude palm oil with alkali such as sodium hydroxide to separate the FFA from the oil. However, it is known that chemical treatment can lead to saponification of glycerides in the oil, increasing the proportion of mono- and di-glycerides, and formation of a soap phase leading to neutral oil (glyceride) losses and reduced output of refined oil. Chemical treatment of vegetables oils with sodium hydroxide is also known to eliminate some of the principal components which are responsible for their oxidative stability.

In Abd El-salam et al., J Food Process Technol, 2011, S5, an alternative deacidification process for a high-free fatty acid olive oil (HFFAO) is proposed which uses a silica gel treatment instead of using sodium hydroxide or calcium hydroxide. There it is reported that the silica gel is effective in neutralising HFFAO and also removing secondary oxidation substances.

Despite the above, physical methods are generally preferred over chemical methods for deacidification of crude palm oil since they are effective at removing FFA whilst avoiding undesirable saponification and emulsification. As a result, physical refining methods also do not suffer from the same yield losses associated with chemical refining, especially in the case of oils with higher contents of FFA. Physical refining is primarily based on chemical free distillation techniques and commonly involves purging saturated steam through an oil at high temperature under vacuum, thereby removing FFA, as well as odoriferous compounds. Although physical refining has a number of advantages over chemical refining, physical methods are known to be energy intensive and heating oil to high temperature under reduced pressure can lead to secondary reactions which can impact upon its physiochemical and organoleptic properties.

Alternative processes that have been proposed include liquid-liquid extraction techniques with polar solvents, operating on the basis of the solubility differences of FFA and neutral oil in order to effect deacidification. In such a process, FFA are separated from neutral oil by selective partitioning into a particular solvent phase. Meirelles et al., Recent Patents on Engineering 2007, 1, 95-102, gives an overview of such approaches to the deacidification of vegetable oils. Biological methods, chemical reesterfication, supercritical fluid extraction and membrane processing are discussed, although there is a particular focus on liquid-liquid extraction methods. The latter technique is generally considered to be advantageous on the basis that it may be performed at room temperature, does not generate waste products and benefits from low neutral oil losses. However, Meirelles et al. observe that there are significant capital costs associated with the implementation of a liquid-liquid extraction process for deacidification, and there remain doubts as to the overall benefits of this process when implemented on an industrial scale. As such, they call for a comparison between the energy requirements for evaporating the solvent as part of its recovery from the refined oil in the liquid-liquid extraction with

those associated with operating under high temperature and high vacuum in physical refining methods.

A further issue relates to the stability of glyceride oil, such as palm oil, obtained following the refining process. It is known that there is a propensity for the content of FFA in refined palm oil to increase over time as a result of the oxidative and hydrolytic instability of the oil. The increase in FFA negatively affects the organoleptic qualities of the refined palm oil over time, to the point where it eventually becomes rancid. This lack of storage stability of palm oil has a significant impact upon the market value of palm oil. There are a number of potential treatment options for treating palm oil such that it might be more effectively stored. These include storing in the presence of basic oxides, such as calcium oxide, magnesium oxide and dolomite, or hydrotalcites which neutralise FFA when it is produced. Although, these acid scavengers are useful in preventing FFA levels rising beyond certain thresholds during storage, there is the problem that metal carboxylates are formed as the neutralisation salts which have a high solubility in the oil. This is undesirable as they may negatively impact the organoleptic and/or physiochemical properties of the oil.

EP 1911829 discloses a process for deacidifying a crude oil and/or crude oil distillate containing organic acids comprising the steps of: (a) contacting the crude oil and/or crude oil distillate containing organic acids with a basic ionic liquid and extracting at least a portion of the organic acids into the basic ionic liquid as an extract phase; and (b) separating a crude oil and/or crude oil distillate phase which is reduced in acidity from the basic ionic liquid extract phase.

There remains a need for a process for deacidification of glyceride oils, such as palm oil, which is capable of producing high value products, whilst avoiding the high energy requirements associated with known processes, particularly those relating to physical refining. There is also a need for a solution to the long term storage problems associated with refined glyceride oils, such as refined palm oil, where FFA content is known to be replenished at least to some extent over a period of time.

One aspect of this invention is based on the surprising discovery that specifically selected basic ionic liquids comprising a basic anion can be advantageously utilised for the deacidification of glyceride oils, preferably palm oil, as part of a chemical refining process. A further aspect of the invention is based on the surprising discovery that specifically selected basic ionic liquids comprising a basic anion can also be advantageously utilised for improving the storage stability of refined glyceride oils, preferably refined palm oil.

The term "ionic liquid" as used herein refers to a liquid that is capable of being produced by melting a salt, and when so produced consists solely of ions. An ionic liquid may be formed from a homogeneous substance comprising one species of cation and one species of anion, or it can be composed of more than one species of cation and/or more than one species of anion. Thus, an ionic liquid may be composed of more than one species of cation and one species of anion. An ionic liquid may further be composed of one species of cation, and one or more species of anion. Still further, an ionic liquid may be composed of more than one species of cation and more than one species of anion.

The term "ionic liquid" includes compounds having both high melting points and compounds having low melting points, e.g. at or below room temperature. Thus, many ionic liquids have melting points below 200 °C, preferably below 150 °C, particularly below 100 °C, around room temperature (15 to 30 °C), or even below 0 °C. Ionic liquids having melting points below around 30 °C are commonly referred to as "room temperature ionic liquids". In room temperature ionic liquids, the structures of the cation and anion prevent the formation of an ordered crystalline structure and therefore the salt is liquid at room temperature.

Ionic liquids are most widely known as solvents, because of their negligible vapour pressure, temperature stability, low flammability and recyclability make them environmentally friendly. Due to the vast number of anion/cation combinations that are available it is possible to fine-tune the physical properties of the ionic liquid (e.g. melting point, density, viscosity, and miscibility with water or organic solvents) to suit the requirements of a particular application.

Ionic liquids have thus been exploited as solvents for various organic compound and polymer syntheses in the past due to their advantageous properties. There have been a number of reports which speculate upon the differing roles ionic liquids may play when used as solvents. S.-I.Ishiguro et al., Pure Appl. Chem., Vol. 82, No.10, pp 1927 to 1941, 2010, reports the crucial role that solute-solvent interaction, or solvation of solute ions or molecules, plays in reactions where ionic liquids can be considered to act as solvents. Particular emphasis is placed on the important role liquid structure of such solvents plays on reactions in solution, where solvent particles may be liberated upon reaction before being transferred and accommodated in the bulk liquid structure.

S.-I.Ishiguro et al indicate that the liquid structure of ionic liquids is heterogeneous, unlike molecular solvents, which may bring about specific solvent properties, as well as specific solute reactivities in ionic liquids. However, they concede that the acid-base property of ionic liquids is, for instance, not satisfactorily established in terms of solution chemistry, particularly in comparison to normal molecular liquids. It is thus difficult to predict the role ionic liquids can serve in specific solution based reactions.

A currently far less common use of ionic liquids is in extraction processes where species may be preferentially partitioned into an ionic liquid phase. One such application resembles the liquid-liquid extraction methods discussed hereinbefore with respect to conventional solvents. As an example, ionic liquids have in the past been used in the separation of naphthenic acids from crude oil or a crude oil distillate selected from liquefied petroleum gas, gasoline, naphtha, kerosene, diesel fuel, fuel oil, lubricating oil and paraffin wax, or a mixture thereof, as reported in WO

2010/136783 and WO 2012/069832. These separations operate on the basis of preferential partitioning of napthenic acids into an ionic liquid phase, corresponding to a form of liquid-liquid extraction.

Manic, M. S. et al., AIChE Journal, May 2011, Vol. 57, No.5, pages 1344 to 1355 also report the use of two ionic liquids, namely cocos alkyl pentaethoximethyl ammonium methylsulfate (AMMOENG100) and 1-butyl-3-methylimidazolium dicyanamide (bmimDCA), for the separation of linoleic acid from soybean oil specifically by a liquid-liquid extraction. AMMOENG100 and bmimDCA were selected for this purpose on the basis of their low miscibility with soybean oil and complete miscibility with linoleic acid.

Of the two ionic liquids mentioned above, AMMOENG100 was found to give significantly better separation of linoleic acid into the ionic liquid phase. The authors propose that this is due to the greater affinity between this ionic liquid and linoleic acid, as a result of the cocos alkyl chain in AMMOENG100. The cocos alkyl chain is a mixture of several fatty acid chains, with approximately 50 wt.% lauric acid alkyl chain. It is proposed that the affinity between AMMOENG100 and linoleic acid is a result of the former also being derived from a fatty acid. In contrast, the cation of BmimDCA corresponds to an aromatic 1-butyl-3-methylimidazolium group which does not incorporate any cocos alkyl chain and so has a substantially different structure to the cation of AMMOENG100.

The ionic liquids used in the process of the present invention are based on simple ammonium cations that are neither derived from a fatty acid, nor aromatic in nature, Moreover, the ionic liquids used in the process of the present invention incorporate basic anions. These anions are not merely spectator anions selected by virtue of their ability to confer a certain melting point on the resulting ionic liquid. The basicity of the anions forming part of the ionic liquids used in conjunction with the present invention is believed to contribute to their ability to remove free fatty acids from glyceride oils.

Rather than employing ionic liquids in liquid-liquid extraction methods, the process of the present invention makes use of certain specifically selected basic ionic liquids in an acid-base type reaction with free fatty acids (FFA) contained in glyceride oils, such as palm oil. The process of the present invention corresponds to a new form of chemical refining of glyceride oils, such as palm oil, involving reaction of the basic ionic liquid with the FFA, forming a neutralisation salt, comprising the conjugate base of the FAA, and water or an alcohol (depending on the nature of the basic anion of the basic ionic liquid).

Advantageously, the process of the present invention may be performed under mild conditions of temperature and pressure, especially compared to known prior art processes, and allow for the effective removal of FFA from glyceride oils, such as palm oil, to yield a high quality treated oil. The neutralisation salts deriving from the reaction of the basic ionic liquid and the free fatty acids are ionic liquids themselves. Thus, the process of the present invention involves reaction of a basic ionic liquid with FFA resulting in the *in situ* formation of a further ionic liquid comprising the conjugate base of the FFA.

The neutralisation salt (ionic liquid comprising the conjugate base of the FAA) formed from the reaction of the basic ionic liquid and the FAA according to the present invention are non-toxic. As such, it is not necessary to undertake any exhaustive processing to completely remove all traces from the treated oil, in order for the oil to be fit for commercial use. This is advantageous in that it can increase the yield of treated glyceride oils, such as treated palm oil, compared with alternative processes where toxic materials are used or formed during deacidification, such that purification of the treated oil is subsequently necessary.

In some embodiments, the neutralisation salts derived from reaction of the basic ionic liquid with FFA are recovered from the glyceride oil. In that case, the basic ionic liquid can be regenerated from the neutralisation salts by means of a regeneration process in order to be recycled to the deacidification stage, if desired.

In some embodiments, the process of the invention may produce high value by-products, which can represent an additional revenue stream to counteract the significant costs of deacidification of glyceride oils, such as palm oil. For example, neutralisation salts of FFA obtained by the process of the present invention may be commercially valuable by-products in themselves. In particular, neutralisation salts of stearic acid are particularly desirable potential by-products of the process of the present invention.

In accordance with a first aspect of the present invention, there is provided a process for removing free fatty acids from glyceride oil, preferably palm oil, containing free fatty acids, said process comprising the steps of:

(i) contacting the glyceride oil containing free fatty acids with the basic ionic liquid; wherein the basic ionic liquid has a basic anion selected from hydroxide, alkoxide, alkylcarbonate, hydrogen carbonate, serinate, prolinate, histidinate, threoninate, valinate, asparaginate, taurinate and lysinate; and a cation selected from:

$$[N(R^a)(R^b)(R^c)(R^d)]^+,$$

wherein: $R^a$, $R^b$, $R^c$ and $R^d$ are each independently selected from hydrogen, a $C_1$ to $C_8$, straight chain or branched alkyl group or a $C_3$ to $C_6$ cycloalkyl group, wherein said alkyl or cycloalkyl groups are unsubstituted or may be substituted by one to three groups selected from: $C_1$ to $C_4$ alkoxy, $C_2$ to $C_8$ alkoxyalkoxy, $C_3$ to $C_6$ cycloalkyl, -OH, -SH, - $CO_2(C_1$ to $C_6)$alkyl, -OC(O)($C_1$ to $C_6$)alkyl, or any two of $R^a$, $R^b$, $R^c$ and $R^d$ combine to form an alkylene chain

$-(CH_2)_q-$ wherein q is from 3 to 6; and
(ii) obtaining a treated glyceride oil having a reduced content of free fatty acid compared to the glyceride oil feed of step (i).

In an embodiment of the present invention, the process further comprises separating neutralisation salts of free fatty acids formed in step (i) and/or any residual basic ionic liquid from the treated glyceride oil.

The term "basic" used herein refers to Bronsted bases having the ability to react with (neutralise) acids to form salts. The pH range of bases is from above 7.0 to 14.0 when dissolved or suspended in water.

The term "glyceride oil" used herein refers to an oil or fat which comprises glycerides (mono-, di- and/or triglycerides) as the major component thereof. Preferably, the glyceride oil is at least partially obtained from a natural source (for example, a plant, animal or fish/crustacean source) and is also preferably edible. Glyceride oils include vegetable oils, marine oils and animal oils/fats.

Vegetable oils include all plant, nut and seed oils. Examples of suitable vegetable oils which may be of use in the present invention include: açai oil, almond oil, beech oil, cashew oil, coconut oil, colza oil, corn oil, cottonseed oil, grapefruit seed oil, grape seed oil, hazelnut oil, hemp oil, lemon oil, macadamia oil, mustard oil, olive oil, orange oil, palm oil, peanut oil, pecan oil, pine nut oil, pistachio oil, poppyseed oil, rapeseed oil, rice bran oil, safflower oil, sesame oil, soybean oil, sunflower oil, walnut oil and wheat germ oil. Preferred, vegetable oils are those selected from coconut oil, corn oil, cottonseed oil, groundnut oil, olive oil, palm oil, rapeseed oil, rice bran oil, safflower oil, soybean oil and sunflower oil. Most preferably, the vegetable oil is palm oil.

Suitable marine oils include oils derived from the tissues of oily fish or crustaceans (e.g. krill). Examples of suitable animal oils/fats include pig fat (lard), duck fat, goose fat, tallow oil, and butter.

Free fatty acids which may be present in the glyceride oils according to the present invention include monounsaturated, polyunsaturated and saturated free fatty acids.

Examples of unsaturated free fatty acids include: myristoleic acid, palmitoleic acid, sapienic acid, oleic acid, elaidic acid, vaccenic acid, linoleic acid, linoelaidic acid, $\alpha$-linolenic acid, arachidonic acid, eicosapentaenoic acid, erucic acid and docosahexaenoic acid. Examples of saturated free fatty acids include: caprylic acid, capric acid, undecylic acid, lauric acid, tridecylic acid, myristic acid, palmitic acid, margaric acid, stearic acid, nonadecylic acid, arachidic acid, heneicosylic acid, behenic acid, lignoceric acid and cerotic acid.

Preferably the glyceride oil used in the present invention is a vegetable oil. More preferably, the glyceride oil is a vegetable oil selected from coconut oil, corn oil, cottonseed oil, groundnut oil, olive oil, palm oil, rapeseed oil, rice bran oil, safflower oil, soybean oil and sunflower oil. Most preferably, the vegetable oil is palm oil.

The term "palm oil" used herein includes an oil at least partially derived from a tree of genus *Elaeis,* forming part of the *Arecaceae* genera, and including the species *Elaeis guineensis* (African oil palm) and *Elaeis oleifera* (American oil palm), or hybrids thereof. Most preferably, the glyceride oil used in accordance with the present invention is palm oil. Thus, palm oil may be used in accordance with all aspects and all embodiments of the invention where reference is made to a glyceride oil. Crude palm oil may be derived from the fibrous mesocarp and the kernels of oil palms. Examples of free fatty acids that may be present in crude palm oil include palmitic ($C_{16}$), oleic ($C_{18}$), stearic ($C_{18}$), myristic ($C_{14}$) and linoleic ($C_{18}$) acids. Palm oil may be fractionated to separate palm olein (liquid) and palm stearin (solid) fractions by fractionating methods typically comprising cooling, crystallisation and membrane separation. Re-fractionation of palm oil olein and palm oil stearin can also provide a palm mid fraction which has a high content of di-saturated triglycerides.

The process of the present invention may be used with palm oil which is either crude or refined, provided there is an amount of FFA present to be removed from the oil, or where FFA may later be formed and neutralised *in situ,* according to some aspects of the invention described herein. The term "crude" used herein in reference to palm oil is intended to mean palm oil which has not undergone refining specifically to remove free fatty acids therefrom, i.e. has not undergone a deacidification step. A crude palm oil is preferably used wherever reference is made herein to palm oil, apart from where reference is specifically made to a treated palm oil in the context of an oil obtained as result of the deacidification process of the invention, or a treated oil which is to have its storage stability improved in accordance with an aspect of the invention described below.

Advantageously, the process of the present invention avoids the traditional pathway leading to the saponification of glycerides, which is a common side reaction when deacidification is conducted with sodium or potassium hydroxide, as in some prior art methods. Furthermore, in contrast to sodium or potassium carboxylate neutralisation salts of free fatty acids, ammonium carboxylate neutralisation salts formed through deacidification with the above described basic ionic liquid are significantly more water soluble. This can be advantageous in any subsequent step of separating the refined palm oil from the neutralisation salts by partitioning into a water phase, which may be used as a solvent for the basic ionic liquid.

In an embodiment of the present invention, the basic anion is selected from alkylcarbonate, hydrogen carbonate, hydroxide and alkoxide; preferably hydrogen carbonate and alkylcarbonate; and more preferably hydrogen carbonate.

Where the basic anion is selected from alkoxide or alkylcarbonate, the alkyl group may be linear or branched

and may be substituted or unsubstituted. In one preferred embodiment, the alkyl group is unsubstituted. In another preferred embodiment, the alkyl group is unbranched. In a more preferred embodiment, the alkyl group is unsubstituted and unbranched.

The alkyl group may comprise from 1 to 10 carbon atoms, preferably from 1 to 8 carbon atoms and more preferably form 1 to 4 carbon atoms. The alkyl group may thus be selected from methyl, ethyl, propyl, butyl, pentyl, hexyl, heptyl, octyl, nonyl and/or decyl. It will be understood that branched alkyl groups such as iso-propyl, iso-butyl, sec-butyl and/or tert-butyl may also be used. Especially preferred are methyl, ethyl, propyl and butyl. In a further preferred embodiment, the alkyl group is selected from methyl and ethyl.

In an embodiment of the present invention, the basic anion is selected from serinate, prolinate, histidinate, threoninate, valinate, asparaginate, taurinate and lysinate.

In a preferred embodiment of the present invention, the basic anion is selected from serinate, lysinate, prolinate, taurinate and threoninate, more preferably from lysinate, prolinate and serinate, most preferably the basic anion is lysinate.

Preferably, the cation is selected from:

$$[N(R^a)(R^b)(R^c)(R^d)]^+,$$

wherein: $R^a$, $R^b$, $R^c$ and $R^d$ are each independently selected from $C_1$ to $C_8$ alkyl, including $C_1$, $C_2$, $C_4$ and $C_6$ alkyl, wherein one or more of $R^a$, $R^b$, $R^c$ or $R^d$ may optionally be substituted by one to three groups as described above.

More preferably, the cation is selected from:

$$[N(R^a)(R^b)(R^c)(R^d)]^+,$$

wherein: $R^a$, $R^b$, $R^c$ and $R^d$ are each independently selected from $C_1$ to $C_4$ alkyl, including $C_1$, $C_2$ and $C_4$ alkyl, wherein at least one of $R^a$, $R^b$, $R^c$ or $R^d$ is substituted by a single -OH group.

Most preferably, the cation is choline:

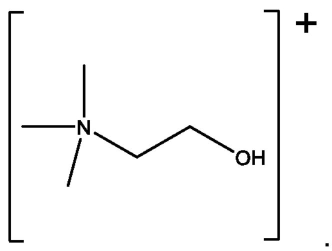

It will be appreciated that in order for glyceride oil, such as palm oil, obtained directly from the process of the invention to be fit for consumption, the basic ionic liquid used for neutralising the FFA, as well as the salt formed from the acid-base reaction, should have little or no toxicity. A basic ionic liquid comprising a choline cation is particularly suitable for use with the process of the present invention. Choline is a water soluble essential nutrient grouped with the B-complex vitamins which is a precursor to acetylcholine, involved in numerous physiological functions. Choline has particularly low toxicity and excellent biodegradability, making it a natural ingredient that is capable of forming an ionic liquid which is particularly useful in the process of the present invention.

Thus, in a preferred embodiment of the present invention, there is provided a non-toxic process for removing free fatty acids from glyceride oil, preferably palm oil, containing free fatty acids, said process comprising the steps of:

(i) contacting the glyceride oil containing free fatty acids with a basic ionic liquid; wherein the basic ionic liquid has a basic anion selected from hydroxide, alkoxide, alkylcarbonate, hydrogen carbonate, serinate, prolinate, histidinate, threoninate, valinate, asparaginate, taurinate and lysinate; and a choline cation:

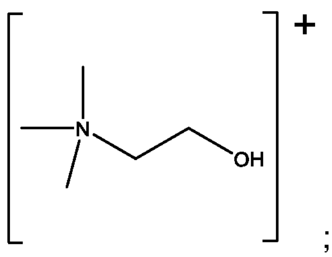

;

and

(ii) obtaining a treated glyceride oil having a reduced content of free fatty acid compared to the glyceride oil feed of step (i).

More preferably, the basic ionic liquid is selected from:
choline bicarbonate:

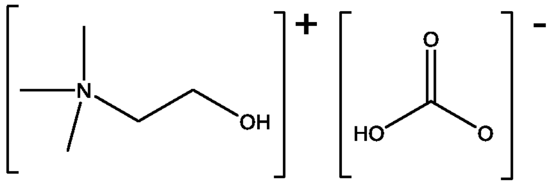

,

or choline alkylcarbonate:

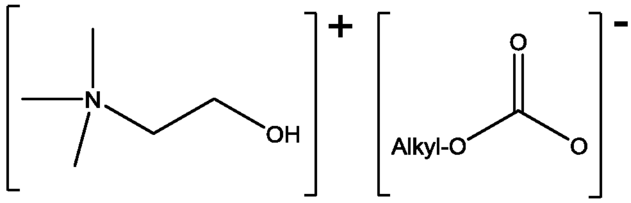

wherein the alkyl group is an alkyl group as described hereinbefore.

Yet more preferably, the basic ionic liquid is:
choline bicarbonate:

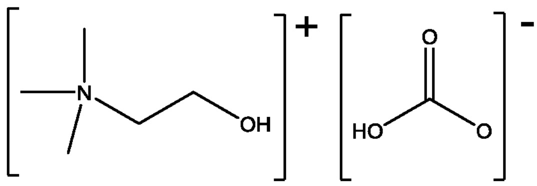

.

Basic ionic liquids comprising a basic anion selected from serinate, prolinate, histidinate, threoninate, valinate, asparaginate, taurinate and lysinate are also particularly suitable in the process of the present invention due to the particularly low toxicity of these amino acid derivatives.

Thus, in a further preferred embodiment of the present invention, there is provided a non-toxic process for removing free fatty acids from glyceride oil, preferably palm oil, containing free fatty acids comprising the steps of:

(i) contacting the glyceride oil containing free fatty acids with a basic ionic liquid; wherein the basic ionic liquid has a basic anion selected from serinate, prolinate, histidinate, threoninate, valinate, asparaginate, taurinate and lysinate; and a cation selected from:

$$[N(R^a)(R^b)(R^c)(R^d)]^+,$$

wherein: $R^a$, $R^b$, $R^c$ and $R^d$ are each independently selected from hydrogen, a $C_1$ to $C_8$, straight chain or branched alkyl group or a $C_3$ to $C_6$ cycloalkyl group, wherein said alkyl or cycloalkyl groups are unsubstituted or may be substituted by one to three groups selected from: $C_1$ to $C_4$ alkoxy, $C_2$ to $C_8$ alkoxyalkoxy, $C_3$ to $C_6$ cycloalkyl, -OH, -SH, - $CO_2(C_1$ to $C_6)$alkyl, -OC(O)($C_1$ to $C_6$)alkyl, or any two of $R^a$, $R^b$, $R^c$ and $R^d$ combine to form an alkylene chain $-(CH_2)_q-$ wherein q is from 3 to 6; and

(ii) obtaining a treated glyceride oil having a reduced content of free fatty acid compared to the glyceride oil feed of step (i).

More preferably, the basic anion is selected from serinate, lysinate, prolinate, taurinate and threoninate, even

more preferably from lysinate, prolinate and serinate, and yet more preferably the basic anion is lysinate.

More preferably, the cation is selected from:

$[N(R^a)(R^b)(R^c)(R^d)]^+$,

wherein: $R^a$, $R^b$, $R^c$ and $R^d$ are each independently selected from $C_1$ to $C_8$ alkyl, including $C_1$, $C_2$ ,$C_4$ and $C_6$ alkyl, wherein one or more of $R^a$, $R^b$, $R^c$ or $R^d$ may optionally be substituted by one to three groups as described above.

Even more preferably, the cation is selected from:

$[N(R^a)(R^b)(R^c)(R^d)]^+$, wherein

: $R^a$, $R^b$, $R^c$ and $R^d$ are each independently selected from $C_1$ to $C_4$ alkyl, including $C_1$, $C_2$ and $C_4$ alkyl, wherein at least one of $R^a$, $R^b$, $R^c$ or $R^d$ is substituted by a single -OH group.

Yet more preferably, the cation is choline:

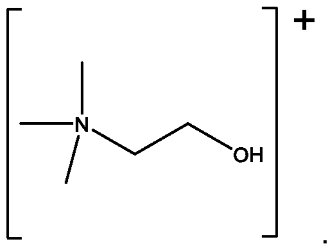

It will be appreciated that, in the above described non-toxic processes, the process may still further comprise a step of separating neutralisation salts of free fatty acids formed in step (i) and/or any residual basic ionic liquid from the treated glyceride oil.

The choline based neutralisation salts and/or amino acid derivatives formed in the above embodiments of the present invention are of such low toxicity that it is not necessary to commit the treated glyceride oil to further processing to completely remove all trace of the neutralisation salts. Moreover, a minor content of the choline and/or amino acid based basic ionic liquids useful in the non-toxic embodiments described above may be desirable for improving the nutritional value of the treated glyceride oil. For instance, the presence of a basic ionic liquid comprising a choline cation and/or an amino acid anion as described hereinbefore, may be particularly beneficial for increasing the nutritional value of the glyceride oil.

Thus, in a further aspect, the present invention provides a treated glyceride oil composition, preferably a treated palm oil composition, which is obtained by a non-toxic process as described above using a basic ionic liquid comprising a choline cation, the composition comprising between 0.1 and 25 wt.%, choline based neutralisation salt, preferably 0.1 and 5 wt.%, more preferably between 0.1 and 3 wt.%, and most preferably comprising between 0.1 and 2 wt.% of a choline based neutralisation salt.

Alternatively and/or additionally, the present invention provides a treated glyceride oil composition, preferably a treated palm oil composition, which is obtained by a non-toxic process as described above using a basic ionic comprising an anion selected from serinate, prolinate, histidinate, threoninate, valinate, asparaginate, taurinate and lysinate, the composition comprising between 0.1 and 25 wt.% of an anion selected from serinate, prolinate, histidinate, threoninate, valinate, asparaginate, taurinate and lysinate, preferably between 0.1 and 5 wt.%, more preferably between 0.1 and 3 wt.%, most preferably comprising between 0.1 and 2 wt.% of an anion selected from serinate, prolinate, histidinate, threoninate, valinate, asparaginate, taurinate and lysinate.

In a particularly preferred embodiment, the process of the present invention comprises contacting glyceride oil, preferably palm oil, comprising stearic acid with a basic ionic liquid as described hereinbefore which comprises a choline cation, preferably wherein the basic ionic liquid is choline bicarbonate or choline alkylcarbonate, to form choline stearate (as illustrated in Scheme I below) and to obtain a treated glyceride oil having a reduced content of stearic acid compared to the glyceride oil feed. Preferably, choline stearate is isolated as a high value by-product of the process. As described hereinbefore, the neutralisation salts formed following the reaction of FFA with a basic ionic liquid in accordance with the present invention are themselves ionic liquids comprising the conjugate base of the FAA (as is clear from Scheme I below).

## Scheme I

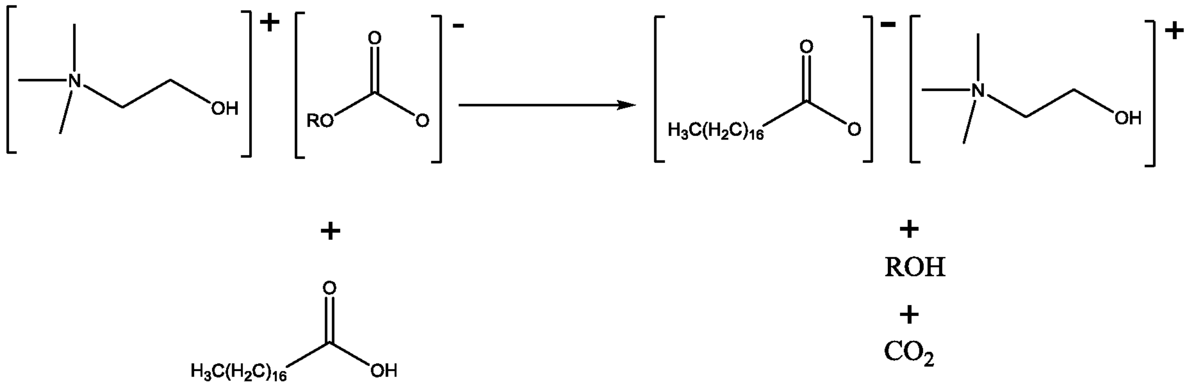

wherein R is H or an alkyl group as defined hereinbefore.

The basic ionic liquid and the glyceride oil may be contacted in a mass ratio of from 1:25, and from 1:50, and also from 1:75.

The basic ionic liquid may be utilised in the process of the present invention in either supported or unsupported form. Suitable supports for use in the present invention may be selected from silica, alumina, alumina-silica, carbon, activated carbon or a zeolite. Preferably, the support is silica.

Methods for supporting an ionic liquid on a support material are well known in the art, such as for example, in US 2002/0169071, US 2002/0198100 and US 2008/0306319. Typically, the basic ionic liquid may be physisorbed or chemisorbed on the support material, and is preferably physisorbed.

In the processes of the present invention, the basic ionic liquid may be adsorbed onto the support in a basic ionic liquid:support mass ratio of from 10:1 to 1:10, preferably in a basic ionic liquid:support mass ratio of from 1:2 to 2:1.

Where the basic ionic liquid is unsupported, it is preferably immiscible with the oil. By immiscible with the oil it is meant that the basic ionic liquid is soluble in the treated glyceride oil phase at a concentration of less than 50 ppm, preferably less than 30 ppm, more preferably less than 20 ppm, most preferably, less than 10 ppm, for example, less than 5 ppm. Thus, the solubility of the basic ionic liquid is tailored so that the basic ionic liquid is immiscible with the oil or fat.

The solubility of the basic ionic liquid may also be tailored such that the basic ionic liquid is either insoluble or soluble in water. By insoluble in water it is meant that the basic ionic liquid has a solubility in water of less than 50 ppm, preferably, less than 30 ppm, more preferably less than 20 ppm, most preferably, less than 10 ppm, for example, less than 5 ppm. Where the basic ionic liquid is unsupported, it is preferably miscible with water.

If desired, the acid-base reaction may be conducted in the presence of a solvent which is compatible with the basic ionic liquid and the glyceride oil. The use of a solvent may be appropriate where it is desired to modify the viscosity of an ionic liquid. Alternatively, use of a solvent may confer desirable properties on the liquid structure of the solution based reaction that are particularly suitable for promoting the acid-base reaction between the basic ionic liquid and the FFA. Suitable solvents for this purpose include polar solvents, such as water, or alcohol, for example methanol or ethanol.

In one embodiment of the invention, solvent is present in an amount less than 10 wt% based on the total weight of the reaction mixture. In a further embodiment of the invention, solvent is present in an amount less than 5 wt% based on the total weight of the reaction mixture, for example in amount less than 2 wt.%. In another embodiment, solvent is present in amount of 1 wt% or less based on the total weight of the reaction mixture.

In an alternative embodiment, the basic ionic liquid is soluble in water and is contacted with the glyceride oil, preferably palm oil, in step (i) in the form of an aqueous solution. Preferably, the concentration of the basic ionic liquid in aqueous solution is 75 to 85 w/w%, more preferably 80 w/w%.

Suitably, the contacting step (i) of the process of the present invention is carried out at a temperature of from ambient temperature to 150 °C, preferably from ambient temperature to 100 °C, more preferably ambient temperature to 50 °C, for example, 40 °C. As will be appreciated, where the glyceride oil is solid at room temperature, higher temperatures are preferable such that the glyceride oil is in a liquid form for contacting in step (i). Suitably, the contacting step (i) is carried out at a pressure of from 0.1 MPa absolute to 10 MPa absolute (1 bar absolute to 100 bar absolute).

Where the ionic liquid is unsupported, step (i) may be carried out by contacting the glyceride oil with the basic ionic liquid in a vessel wherein the resulting mixture is stirred using, for example, a mechanical stirrer, an ultrasonic stirrer, an electromagnetic stirrer or by bubbling an inert gas through the mixture. Suitably, the basic ionic liquid and the glyceride oil may be contacted in the extraction step in a volume ratio of from greater than 1:40 to 1:300, and may be contacted in a mass ratio of from 1:50, preferably from 1:100. The mixing step may last from 1 minute to 60 minutes, preferably 2 to 30 minutes, more preferably, 5 to 20 minutes and most preferably, 8 to 15 minutes.

It will be understood that in the process of the present invention, it is preferable that the amount of basic ionic liquid employed in the contacting step (i) be at least equivalent in molar terms with the FFA contained in the glyceride oil. The content of FFA in the glyceride oil may therefore be determined prior to treatment with basic ionic liquid using common titration techniques, of which the person of skill in the art is aware. For instance, titration with sodium hydroxide using phenolphthalein indicator may be used to determine the FFA content of glyceride oil.

For unsupported basic ionic liquids, step (ii) may be carried out by gravity separation, (for example, in a settling unit) where the treated glyceride oil, such as palm oil, is generally the upper phase and water or alcohol (possible by-products of the acid-base reaction), salts of free fatty acids and any residual basic ionic liquid are incorporated in the lower phase in the settling unit. Where the unsupported basic ionic liquid is insoluble in water and/or alcohol, it is possible that a 3 phase mixture will result if there is significant residual basic ionic liquid where the treated glyceride oilis generally the upper phase, the water and/or alcohol containing the salts of the free fatty acid is the middle phase and the and the basic ionic liquid is the lower phase in the settling unit. The phases may also be separated in step (ii) using, for example, a decanter, a hydrocyclone, electrostatic coalesce, a centrifuge or a membrane filter press. Preferably, the phases are separated by means of a centrifuge in step (ii). Step (i) followed by step (ii) may be repeated several times, preferably 2 to 6, for example 2 to 4 times, until the level of free fatty acids in the glyceride oil is reduced to an acceptable value.

Steps (i) and (ii) may also be carried out together in a counter-current reaction column. The glyceride oil containing FFA (hereinafter "oil feed stream") is generally introduced at or near the bottom of the counter-current reaction column and the basic ionic liquid (hereinafter "basic ionic liquid feed stream") at or near the top of the counter-current reaction column. A glyceride oil phase which is reduced in FFA content (hereinafter "product oil stream") is withdrawn from the top of the column and a by-product phase containing water and salts of FFA formed from the acid-base reaction as well as any residual basic ionic liquid (hereinafter "by-product stream") from at or near the bottom thereof. Preferably, the counter-current reaction column has a sump region for collecting the by-product stream. Preferably, the glyceride oil feed stream is introduced to the counter-current reaction column immediately above the sump region. More than one counter-current reaction column may be employed, for example 2 to 6, preferably 2 to 3 columns arranged in series. Preferably, the counter-current reaction column is packed with a structured packing material, for example, glass Raschig rings, thereby increasing the flow path for the oil and basic ionic liquid through the column. Alternatively, the counter-current reaction column may contain a plurality of trays.

Steps (i) and (ii) may also be carried out together in a centrifugal contact separator, for example, a centrifugal contact separator as described in US 4,959,158, US 5,571,070, US 5,591,340, US 5,762,800, WO 99/12650, and WO 00/29120. Suitable centrifugal contact separators include those supplied by Costner Industries Nevada, Inc. The glyceride oil containing FAA and the basic ionic liquid may be introduced into an annular mixing zone of the centrifugal contact separator. Preferably, the glyceride oil containing FFA and the basic ionic liquid are introduced as separate feed streams into the annular mixing zone. The glyceride oil and basic ionic liquid are rapidly mixed in the annular mixing zone such that at least a portion of the FFA are reacted with the basic ionic liquid. The resulting mixture is then passed to a separation zone wherein a centrifugal force is applied to the mixture to produce a clean separation of an oil phase and an aqueous by-product phase.

Preferably, a plurality of centrifugal contact separators are used in series, preferably, 2 to 6, for example 2 to 3. Preferably, the glyceride oil feed stream is introduced into the first centrifugal contact separator in the series while the basic ionic liquid feed stream is introduced into the last centrifugal contact separator in the series such that glyceride oil of progressively decreasing FFA content is passed from the first through to the last centrifugal contact separator in the series while a basic ionic liquid stream of progressively increasing water and salt of FFA content is passed from the last through to the first centrifugal contact separator in the series. Thus, the basic ionic liquid/by-product phase is removed from the first centrifugal contact separator and the treated glyceride oil phase having reduced FFA content is removed from the last centrifugal contact separator in the series.

The treated glyceride oil phase having reduced FFA content (product oil stream) which is obtained from step (ii) may be used directly or may be further processed, for example, by fractional distillation. If necessary, any residual unsupported basic ionic liquid that is present in the treated glyceride oil may be recovered by passing the product oil stream through a silica column such that the residual basic ionic liquid is adsorbed onto the silica column. The adsorbed basic ionic liquid may then be washed off the silica column using a solvent for the basic ionic liquid and the basic ionic liquid may be recovered by driving off the solvent at reduced pressure.

For the supported basic ionic liquids, contacting step (i) and separation step (ii) may also be carried out together by passing the oil through a column packed with a supported basic ionic liquid (i.e. a packed bed arrangement). Thus, the glyceride oil containing FAA may be passed through a column containing the supported basic ionic liquid. The FFA will react with the basic ionic liquid and treated glyceride oil having a reduced FFA content will be removed from the column. In addition, or alternatively, a fixed-bed arrangement having a plurality of plates and/or trays may be used.

The process of the present invention may additionally comprise the step of regenerating a basic ionic liquid from the neutralisation salt of the FAA obtained from the acid-base reaction for recycling purposes.

The regeneration process preferably comprises:

(a) contacting the salt of the FFA with an acid which has a lower pKa than the FFA from which the salt of the FFA was formed; and
(b) obtaining a salt product formed in step (a) which does not comprise the conjugate base of the FFA as an anion.

The regeneration process may further comprise the step of:
(c) performing an anion exchange step on the salt product to obtain a basic ionic liquid comprising the desired basic anion.
In one embodiment, the regeneration process comprises the steps of:

(a) contacting the salt of the FFA with an acid which has a lower pKa than the FFA from which the salt of the FFA was formed;
(b) obtaining a salt product formed in step (a) which does not comprise the conjugate base of the FFA as an anion; and
(c) performing an anion exchange step on the salt product to obtain a basic ionic liquid comprising the desired basic anion.

Preferably, the pKa of the acid is less than 4.25.
Suitable acids for use in the regeneration process are those that meet the pKa requirements above. The acids thus include mineral acids, for example hydrochloric acid and sulphuric acid. The acids also include organic acids, for example carbonic acid.
It will be appreciated that the above process is suitable for both supported and unsupported ionic liquids.
In a preferred embodiment, the regeneration process comprises forming a basic ionic liquid which is choline bicarbonate from a choline salt of a free fatty acid; comprising the steps of:

(a) contacting the choline salt of a free fatty acid with carbonic acid; and
(b) obtaining choline bicarbonate from the reaction mixture.

Preferably, step (a) is performed by contacting an aqueous solution comprising the choline salt of a free fatty acid with $CO_2$ (e.g. by bubbling $CO_2$ through the aqueous solution). Preferably, the choline salt of a free fatty acid is choline stearate.
Preferably, step (b) is performed by contacting the mixture of step (a) with a solvent which is miscible with choline bicarbonate and separating the solvent from choline bicarbonate.
In an alternative embodiment, the regeneration process comprises forming a basic ionic liquid which is choline hydroxide from a choline salt of a free fatty acid comprising the steps of:

(a) performing an hydrogenation of the choline salt of a free fatty acid in the presence of a suitable catalyst; and
(b) separating choline hydroxide formed in the hydrogenation step (a).

In this embodiment, step (a) is preferably performed in the presence of a methanol solvent. When methanol is used as a solvent, fatty acid methyl ester (FAME) is formed as a by-product of step (a). This can be advantageous as FAME is a known biodiesel component and thus represents a potential revenue stream derived from regeneration of the basic ionic liquid for recycling.
Preferably, hydrogenation step (a) is performed in the presence of a $Pt/TiO_2$ catalyst. Preferably, the choline salt of a free fatty acid is choline stearate and the hydrogenation is performed in the presence of methanol such that methyl stearate is formed as a by-product.
In accordance with the process of the present invention, a treated glyceride oil may be obtained having substantially all of the content of free fatty acid removed therefrom. By "substantially all" it is meant glyceride oil having less than 2 wt.% free fatty acids, preferably less than 1.5 wt.%, more preferably less than 1 wt.%, and most preferably glyceride oil having less than 0.5 wt.% free fatty acids.
In another aspect of the present invention, there is provided a process for preparing a food-grade treated glyceride oil, preferably a food-grade treated palm oil, from a glyceride oil containing free fatty acids comprising removal of free fatty acids from the glyceride oil by the process described hereinbefore. By "food-grade" it is meant a treated glyceride oil containing less than 2 wt.% of free fatty acids, preferably less than 1.5 wt.%, more preferably less than 1 wt.%, and most preferably a treated glyceride oil containing less than 0.5 wt.% free fatty acids.
In a further aspect, the present invention also provides a process for improving the storage stability of a treated glyceride oil, preferably a treated palm oil, comprising adding to a treated glyceride oil, containing less than 2 wt% free fatty acids, preferably less than 1.5 wt.%, more preferably less than 1 wt.%, and most preferably containing less than 0.5 wt.% free fatty acids, a basic ionic liquid having a basic anion selected from hydroxide, alkoxide, alkylcarbonate, hydrogen carbonate, serinate, prolinate, histidinate, threoninate, valinate, asparaginate, taurinate and lysinate and a cation selected from:

$[N(R^a)(R^b)(R^c)(R^d)]^+$,

wherein: $R^a$, $R^b$, $R^c$ and $R^d$ are each independently selected from hydrogen, a $C_1$ to $C_8$, straight chain or branched alkyl group or a $C_3$ to $C_6$ cycloalkyl group, wherein said alkyl or cycloalkyl groups are unsubstituted or may be substituted by one to three groups selected from: $C_1$ to $C_4$ alkoxy, $C_2$ to $C_8$ alkoxyalkoxy, $C_3$ to $C_6$ cycloalkyl, -OH, -SH, - $CO_2(C_1$ to $C_6)$alkyl, -OC(O)($C_1$ to $C_6$)alkyl, or any two of $R^a$, $R^b$, $R^c$ and $R^d$ combine to form an alkylene chain $-(CH_2)_q-$ wherein q is from 3 to 6.

Preferably, the basic anion is selected from serinate, lysinate, prolinate, taurinate and threoninate, more preferably from lysinate, prolinate and serinate. Most preferably, the basic anion is selected from lysinate.

Preferably, the cation is selected from:

$[N(R^a)(R^b)(R^c)(R^d)]+$,

wherein: $R^a$, $R^b$, $R^c$ and $R^d$ are each independently selected from $C_1$ to $C_8$ alkyl, including $C_1$, $C_2$, $C_4$ and $C_6$ alkyl, wherein one or more of $R^a$, $R^b$, $R^c$ or $R^d$ may optionally be substituted by one to three groups as described above.

More preferably, the cation is selected from:

$[N(R^a)(R^b)(R^c)(R^d)]^+$,

wherein: $R^a$, $R^b$, $R^c$ and $R^d$ are each independently selected from $C_1$ to $C_4$ alkyl, including $C_1$, $C_2$ and $C_4$ alkyl, wherein at least one of $R^a$, $R^b$, $R^c$ or $R^d$ is substituted by a single -OH group.

Most preferably, the cation is choline:

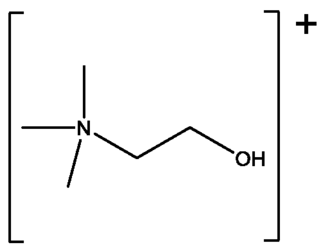

In the context of the present invention, "improving the storage stability" is intended to mean extending the time over which levels of FFA are replenished to the extent that the oil is no longer considered food grade, i.e. wherein the content of FFA is more than 2 wt.%.

In the above further aspect of the invention, the basic ionic liquid component acts as an acid scavenger which neutralises FFA formed in a glyceride oil, preferably in palm oil, over time, for instance, as a result of its oxidative and hydrolytic instability. Thus, in accordance with the above further aspect of the invention, the basic ionic liquid may be added to treated glyceride oil, preferably treated palm oil, which is intended to be stored temporarily, or is in transit and thereby exposed to conditions such as heat which would normally exacerbate degrading of the oil and lead to increased formation of FFA. The basic ionic liquid component, and/or any neutralisation salts may be separated from the treated glyceride oil before its intended use. Alternatively, because of low toxicity and the potential for improving the nutritional value of the glyceride oil, the glyceride oil may be used without any separation from the basic ionic liquid or any neutralisation components.

Preferably, the basic ionic liquid is immiscible with the glyceride oil. By immiscible with the oil it is meant that the basic ionic liquid is soluble in the oil at a concentration of less than 50 ppm, preferably less than 30 ppm, more preferably less than 20 ppm, most preferably, less than 10 ppm, for example, less than 5 ppm. Thus, the solubility of the basic ionic liquid may be tailored so that the basic ionic liquid is immiscible with the oil. If the basic ionic liquid is immiscible with the oil then any subsequent separation from the oil may be easier. Simple phase separation techniques may be employed using, for example, a decanter, a hydrocyclone, electrostatic coalesce, a centrifuge or a membrane filter press, as described hereinbefore.

In a particularly preferred embodiment, the process of improving the storage stability of the oil comprises adding choline lysinate to the treated glyceride oil, preferably palm oil. Choline lysinate is particularly advantageous in this aspect of the invention as it is immiscible with many oils, including palm oil.

In a further preferred embodiment of the above further aspect of the invention, the process of improving the storage stability of the treated glyceride oil, preferably treated palm oil, further comprises adding a base anion exchange resin, in addition to the basic ionic liquid. The base anion exchange resin is capable of absorbing FFA formed in the

glyceride oil in order to assist with keeping its content low during periods of storage. Suitable base anion exchange resin includes AMBERLITE (Trade Mark) IRA96, which is a styrene divinylbenzene copolymer in the free base ionic form, available from Rohm and Haas.

In a yet further aspect of the invention, there is provided a glyceride oil composition, preferably a palm oil composition, comprising treated glyceride oil, containing less than 2 wt% free fatty acids, preferably less than 1.5 wt.%, more preferably less than 1 wt.%, and most preferably a treated glyceride oil containing less than 0.5 wt.% free fatty acids and a basic ionic liquid having a basic anion selected from hydroxide, alkoxide, alkylcarbonate, hydrogen carbonate, serinate, prolinate, histidinate, threoninate, valinate, asparaginate, taurinate and lysinate and a cation selected from:

$$[N(R^a)(R^b)(R^c)(R^d)]^+,$$

wherein: $R^a$, $R^b$, $R^c$ and $R^d$ are each independently selected from hydrogen, a $C_1$ to $C_8$, straight chain or branched alkyl group or a $C_3$ to $C_6$ cycloalkyl group, wherein said alkyl or cycloalkyl groups are unsubstituted or may be substituted by one to three groups selected from: $C_1$ to $C_4$ alkoxy, $C_2$ to $C_8$ alkoxyalkoxy, $C_3$ to $C_6$ cycloalkyl, -OH, -SH, - $CO_2(C_1$ to $C_6)$alkyl, -OC(O)($C_1$ to $C_6$)alkyl, or any two of $R^a$, $R^b$, $R^c$ and $R^d$ combine to form an alkylene chain $-(CH_2)_q-$ wherein q is from 3 to 6.

In a preferred embodiment of the above further aspect of the invention, the basic anion is selected from serinate, prolinate, histidinate, threoninate, valinate, asparaginate, taurinate and lysinate.

In a more preferred embodiment of the above further aspect of the invention, the basic anion is selected from serinate, lysinate, prolinate, taurinate and threoninate, In a yet more preferred embodiment of the above further aspect of the invention the basic anion is selected from lysinate, prolinate and serinate.

In a most preferred embodiment of the above further aspect of the invention the basic anion is lysinate.

Preferably, the cation is selected from:

$$[N(R^a)(R^b)(R^c)(R^d)]^+,$$

wherein: $R^a$, $R^b$, $R^c$ and $R^d$ are each independently selected from $C_1$ to $C_8$ alkyl, including $C_1$, $C_2$, $C_4$ and $C_6$ alkyl, wherein one or more of $R^a$, $R^b$, $R^c$ or $R^d$ may optionally be substituted by one to three groups as described above.

More preferably, the cation is selected from:

$$[N(R^a)(R^b)(R^c)(R^d)]^+,$$

wherein: $R^a$, $R^b$, $R^c$ and $R^d$ are each independently selected from $C_1$ to $C_4$ alkyl, including $C_1$, $C_2$ and $C_4$ alkyl, wherein at least one of $R^a$, $R^b$, $R^c$ or $R^d$ is substituted by a single -OH group.

Most preferably, the cation is choline:

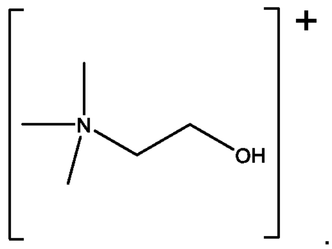

In a particularly preferred embodiment of the above further aspect of the invention, the glyceride oil composition comprises choline lysinate. Choline lysinate is particularly advantageous in this aspect of the present invention as it is immiscible with many oils, including palm oil.

In one embodiment of the above further aspect of the invention, the glyceride oil composition comprises between 0.1 and 25 wt.% basic ionic liquid, preferably between 0.1 and 5 wt.% basic ionic liquid, more preferably between 0.1 and 3 wt.% basic ionic liquid, most preferably the composition comprises between 0.1 and 2 wt.% basic ionic liquid, for example 1 wt.%.

In a further preferred embodiment of the above further aspect of the invention, the glyceride oil composition further comprises a base anion exchange resin, in addition to the basic ionic liquid. Suitable base anion exchange resin includes AMBERLITE (Trade Mark) IRA96, which is a styrene divinylbenzene copolymer in the free base ionic form, available from Rohm and Haas.

It will be appreciated that in the above further aspects of the invention the basic ionic liquid may be used in either supported or unsupported forms, as in the other aspects of the invention.

The present invention also provides a use of a basic ionic liquid as described hereinbefore for removing free fatty acids from glyceride oils, preferably from palm oil, containing free fatty acids.

The present invention also provides a use of a basic ionic liquid as described hereinbefore as an acid scavenger in a glyceride oil composition, preferably a palm oil composition.

The present invention also provides a use of a basic ionic liquid as described hereinbefore for improving the storage stability of treated glyceride oils, preferably treated palm oil.

Embodiments of the invention described hereinbefore may be combined with any other compatible embodiments to form further embodiments of the invention.

The present invention will now be illustrated by way of the following examples and with reference to the following figures:

FIGURE 1: Graphical representation of the viscosity of crude and palm oil treated according to the process of the invention at varying temperature.

FIGURE 2: Graphical representation of thermal degradation of palm oil stored at 60 °C different samples: treated palm oil ("PO"), treated palm oil saturated with water ("$POH_20$"), treated palm oil containing AMBERLITE (Trade Mark) IRA96 ("IRA96"), treated palm oil containing molecular sieves ("POMO") and treated palm containing choline lysinate ("POCHOLL").

FIGURE 3: Graphical representation of thermal degradation of palm oil stored at 90 °C different samples: treated palm oil ("PO"), treated palm oil saturated with water ("$POH_20$"), treated palm oil containing AMBERLITE (Trade Mark) IRA96 ("IRA96"), treated palm oil containing molecular sieves ("POMO") and treated palm containing choline lysinate ("POCHOLL").

## EXAMPLES

### Determination of FFA content in Palm Oil.

To a beaker containing 60ml of isopropyl alcohol was added 0.5mL of phenolphthalein. This mixture was heated until boiling and 0.02M potassium hydroxide in isopropyl alcohol was added until a faint pink colour persisted for approximately 10 s.

To a glass vial was added 0.200g of palm oil which was subsequently dissolved in 50 ml of the above hot isopropyl alcohol solution. The resulting solution was titrated whilst stirring with 0.02M potassium hydroxide solution using a 25 ml burette graduated in 0.1 ml to the end point of the phenolphthalein indicator i.e until the pink colour persisted for at least 30 s.

Content of FFA was subsequently calculated using the formula:

$$28.4 \times M \times V / m$$

where:

V is the volume (ml) of potassium hydroxide solution used;
M the molarity of the potassium hydroxide solution; and
m is the mass (g) of the palm oil sample.

### Removal of FFA from palm oil using basic ionic liquid

#### Example 1

Following the above described titration method, palm oil obtained from a third party supplier was found to contain 1.584 wt.% FFA. The palm oil was subsequently doped with stearic acid to give an FFA content of 7.74 wt.%. A 40g sample was heated to 40 °C and then added to 2.250g of an aqueous choline bicarbonate solution (80 w/w%) obtained from Aldrich. The mixture was rapidly stirred for 5 minutes after which the evolution of $CO_2$ had ceased. The mixture was then centrifuged at 2500 rpm for 10 minutes.

The upper oil phase was removed, titrated and found to contain 0.251 wt.% FFA and 0.012 wt.% water. The lower aqueous phase was found to contain choline stearate. $^1H$ NMR showed no evidence of choline stearate in the upper oil phase.

Viscosities of the crude palm doped with strearic acid and the treated palm oil obtained were determined at various temperatures. The results are shown graphically in Figure 1, and indicate that the viscosity of the treated palm oil is significantly reduced at lower temperature compared with the crude palm oil following removal of FFA.

Palm Oil Stability Testing

Example 2

Samples of the treated palm oil having reduced content of FFA from Example 1 were taken and stored at different temperatures (60 °C and 90 °C) in a thermostatically controlled oven. Data was collected periodically over 30 a day period. The long term stability of the treated palm oil was tested alone and in the presence of certain additives as indicated below:

1. No additive

2. Water

3. Free base polymer amberlite

4. Molecular sieves (water scavenger)

5. Choline lysinate (Basic ionic liquid and acid scavenger)

Sample 2 above corresponds to a palm oil composition which is saturated with water at 0.174 w/w%. All additives in samples 3 to 5 above were added at a rate of 4 wt% based on the palm oil.

Tables 1 and 2 below show the FFA content (wt.%) of palm oil for samples 1 to 5 held at temperatures of 60 °C and 90 °C respectively for different time intervals.

Table 1: Samples stored at 60 °C

| Sample No. | 0 days | 2 days | 5 days | 12 days | 30 days |
|---|---|---|---|---|---|
| 1 | 0.124 | 0.404 | 0.896 | 1.12 | 1.560 |
| 2 | 0.124 | 0.453 | 0.969 | 1.075 | 1.860 |
| 3 | 0.124 | 0.505 | 0.679 | 0.701 | 0.742 |
| 4 | 0.124 | 0.284 | 0.395 | 0.814 | |
| 5 | 0.124 | 0.190 | 0.485 | 0.506 | 0.545 |

Table 2: Samples stored at 90 °C

| Sample No. | 0 days | 2 days | 5 days | 12 days | 30 days |
|---|---|---|---|---|---|
| 1 | 0.124 | 0.672 | 0.868 | 1.117 | 2.080 |
| 2 | 0.124 | 0.774 | 1.087 | 2.626 | 4.516 |
| 3 | 0.124 | 0.331 | 0.465 | 0.520 | 0.554 |
| 4 | 0.124 | 0.401 | 0.994 | 1.521 | |
| 5 | 0.124 | 0.351 | 0.313 | 0.390 | 0.413 |

The above results show that significant thermal degradation of the palm oil occurs at both 60 °C and 90 °C for samples 1 and 2, which contain no additive or are saturated with water respectively, as demonstrated by the formation of FFA over time. The combination of water in the palm oil (sample 2) and higher temperature (90 °C) results in significantly increased degradation of the oil, with the content of FFA reaching 4.516 wt.%.

In contrast, sample 5 containing basic ionic liquid according to the present invention (choline lysinate) suppresses oil degradation by neutralising FFA such that the FFA content is maintained well below 1 wt.%. The content of

FFA in sample 5 after 30 days at 60 °C is 0.545 wt.% whilst only 0.413 wt.% after 30 days at 90 °C. This is improved over the presence of only water scavenging molecular sieves (sample 3), particularly at storage at 90 °C where FFA content increased to 1.5 wt.% after 12 days.

## Claims

1. A process for removing free fatty acids from glyceride oil containing free fatty acids comprising the steps of:

    (i) contacting the glyceride oil containing free fatty acids with a basic ionic liquid; wherein the basic ionic liquid has a basic anion selected from hydroxide, alkoxide, alkylcarbonate, hydrogen carbonate, serinate, prolinate, histidinate, threoninate, valinate, asparaginate, taurinate and lysinate; and a cation selected from:

    $[N(R^a)(R^b)(R^c)(R^d)]^+$,

    wherein: $R^a$, $R^b$, $R^c$ and $R^d$ are each independently selected from hydrogen, a $C_1$ to $C_8$, straight chain or branched alkyl group or a $C_3$ to $C_6$ cycloalkyl group, wherein said alkyl or cycloalkyl groups are unsubstituted or may be substituted by one to three groups selected from: $C_1$ to $C_4$ alkoxy, $C_2$ to $C_8$ alkoxyalkoxy, $C_3$ to $C_6$ cycloalkyl, -OH, -SH, - $CO_2(C_1$ to $C_6)$alkyl, and -OC(O)($C_1$ to $C_6$)alkyl, or any two of $R^a$, $R^b$, $R^c$ and $R^d$ combine to form an alkylene chain $-(CH_2)_q-$ wherein q is from 3 to 6; and
    (ii) obtaining a treated glyceride oil having a reduced content of free fatty acid compared to the glyceride oil feed of step (i).

2. A process according to Claim 1, further comprising separating one or more neutralisation salts of free fatty acids formed in step (i) and/or any residual basic ionic liquid from the treated glyceride oil.

3. A process according to Claim 1 or Claim 2, wherein the basic anion is selected from alkylcarbonate, hydrogen carbonate, hydroxide and alkoxide.

4. A process according to Claim 1 or Claim 2, wherein the basic anion is selected from serinate, prolinate, histidinate, threoninate, valinate, asparaginate, taurinate and lysinate; preferably wherein the basic anion is selected from serinate, lysinate, prolinate, taurinate and threoninate; more preferably wherein the basic anion is selected from lysinate, prolinate and serinate; and most preferably wherein the basic anion is lysinate.

5. A process according to any of Claims 1 to 4, wherein the cation is selected from:

    $[N(R^a)(R^b)(R^c)(R^d)]^+$,

    wherein: $R^a$, $R^b$, $R^c$ and $R^d$ are each independently selected from $C_1$ to $C_8$ alkyl, including $C_1$, $C_2$, $C_4$ and $C_6$ alkyl, wherein one or more of $R^a$, $R^b$, $R^c$ or $R^d$ may optionally be substituted by one to three groups as defined in Claim 1; preferably wherein the cation is selected from:

    $[N(R^a)(R^b)(R^c)(R^d)]^+$,

    wherein: $R^a$, $R^b$, $R^c$ and $R^d$ are each independently selected from $C_1$ to $C_4$ alkyl, including $C_1$, $C_2$ and $C_4$ alkyl, wherein at least one of $R^a$, $R^b$, $R^c$ or $R^d$ is substituted by a single -OH group; most preferably wherein the cation is choline:

    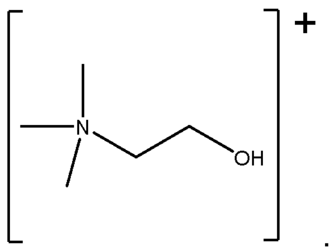

6. A process according to any of Claims 1 to 5, wherein the basic ionic liquid is immiscible in the glyceride oil and/or

soluble in water.

7. A process according to any one of Claims 1 to 6, wherein the basic ionic liquid has a melting point of less than 150°C.

8. A process according to Claim 1 or Claim 2 wherein the basic ionic liquid is choline bicarbonate:

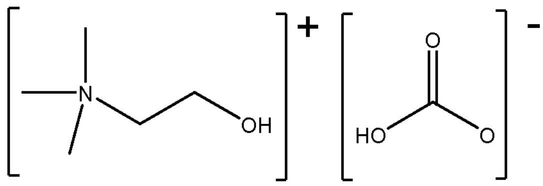

,

or choline lysinate.

9. A process according to any of Claims 1 to 8 wherein the basic ionic liquid is supported; preferably wherein the support is selected from silica, alumina, alumina-silica, carbon, activated carbon or a zeolite; more preferably wherein the support is silica.

10. A process according to Claim 9, wherein the basic ionic liquid is adsorbed onto the support in an ionic liquid:support mass ratio of from 10:1 to 1:10; preferably wherein the basic ionic liquid is adsorbed onto the support in an basic ionic liquid:support mass ratio of from 1:2 to 2:1.

11. A process according to any of Claims 1 to 10 wherein step (i) is carried out at a temperature of from ambient temperature to 50 °C.

12. A process according to any one of Claims 1 to 11, further comprising regenerating the basic ionic liquid from one or more neutralisation salts of a free fatty acid formed in step (i) and isolated from the treated glyceride oil, by way of a regeneration process; preferably wherein regeneration comprises the steps of:

    (a) contacting the salt of the FFA with an acid which has a lower pKa than the FFA from which the salt of the FFA was formed;
    (b) obtaining a salt product formed in step (a) which does not comprise the conjugate base of the FFA as an anion; and
    (c) performing an anion exchange step on the salt product to obtain a basic ionic liquid comprising the desired basic anion.

13. A process according to Claim 5, wherein the cation is choline and the process further comprises: forming choline bicarbonate from one or more neutralisation salts of a free fatty acid, formed in step (i) and isolated from the treated glyceride oil, in a regeneration process, regeneration comprising the steps of:

    (a) contacting the choline salt of a free fatty acid, such as choline stearate, with carbonic acid; and
    (b) obtaining choline bicarbonate from the reaction mixture;
    or forming choline hydroxide from one or more neutralisation salts of a free fatty acid, formed in step (i) and isolated from the treated glyceride oil, by way of a regeneration process, regeneration comprising the steps of:

        (a) performing an hydrogenation of the choline salt of a free fatty acid, such as choline stearate, in the presence of a suitable catalyst;
        (b) separating choline hydroxide formed in the hydrogenation step (a).

14. A process according to any of Claims 1 to 13, wherein the glyceride oil from step (i) of the process is a vegetable oil; preferably wherein the vegetable oil is selected from coconut oil, corn oil, cottonseed oil, groundnut oil, olive oil, palm oil, rapeseed oil, rice bran oil, safflower oil, soybean oil and sunflower oil, or mixtures thereof; more preferably wherein the vegetable oil is palm oil, such as crude palm oil.

15. A treated glyceride oil obtained by the process of Claim 5 wherein the cation is choline, comprising between 0.1 and 25 wt.% of a choline based neutralisation salt or a treated glyceride oil obtained by the process of Claim 4,

comprising between 0.1 and 25 wt.% of an anion selected from serinate, prolinate, histidinate, threoninate, valinate, asparaginate, taurinate and lysinate.

**16.** A treated glyceride oil according to Claim 15, wherein the treated glyceride oil is a treated vegetable oil; preferably wherein the treated vegetable oil is selected from coconut oil, corn oil, cottonseed oil, groundnut oil, olive oil, palm oil, rapeseed oil, rice bran oil, safflower oil, soybean oil and sunflower oil, or mixtures thereof; more preferably wherein the treated vegetable oil is a treated palm oil.

**17.** A process for improving the storage stability of a treated glyceride oil comprising adding to a treated glyceride oil containing less than 2 wt.% free fatty acids (FFA), a basic ionic liquid having a basic anion selected from hydroxide, alkoxide, alkylcarbonate, hydrogen carbonate, serinate, prolinate, histidinate, threoninate, valinate, asparaginate, taurinate and lysinate; and a cation selected from:

$$[N(R^a)(R^b)(R^c)(R^d)]^+,$$

wherein: $R^a$, $R^b$, $R^c$ and $R^d$ are each independently selected from hydrogen, a $C_1$ to $C_8$, straight chain or branched alkyl group or a $C_3$ to $C_6$ cycloalkyl group, wherein said alkyl or cycloalkyl groups are unsubstituted or may be substituted by one to three groups selected from: $C_1$ to $C_4$ alkoxy, $C_2$ to $C_8$ alkoxyalkoxy, $C_3$ to $C_6$ cycloalkyl, -OH, -SH, - $CO_2(C_1$ to $C_6)$alkyl, -OC(O)($C_1$ to $C_6$)alkyl, , or any two of $R^a$, $R^b$, $R^c$ and $R^d$ combine to form an alkylene chain $-(CH_2)_q-$ wherein q is from 3 to 6.

**18.** A process according to Claim 17, wherein the treated glyceride oil contains less than 0.5 wt.% FFA; wherein the basic anion is as defined in Claims 3 or 4; wherein the cation is as defined in Claim 5; and/or wherein the basic ionic liquid is choline lysinate.

**19.** A process according to Claim 17 or Claim 18 further comprising adding a base anion exchange resin to the treated glyceride oil; preferably wherein the base anion exchange resin comprises a styene divinylbenzene copolymer.

**20.** A process according to any of Claims 17 to 19, wherein the treated glyceride oil is a treated vegetable oil; preferably wherein the treated vegetable oil is selected from coconut oil, corn oil, cottonseed oil, groundnut oil, olive oil, palm oil, rapeseed oil, rice bran oil, safflower oil, soybean oil and sunflower oil, or mixtures thereof; more preferably wherein the treated vegetable oil is a treated palm oil.

**21.** A glyceride oil composition comprising treated glyceride oil containing less than 2 wt% free fatty acids (FFA), preferably less than 0.5 wt.% FFA, and a basic ionic liquid, preferably in an amount of between 0.1 and 25 wt.%, having a basic anion selected from hydroxide, alkoxide, alkylcarbonate, hydrogen carbonate, serinate, prolinate, histidinate, threoninate, valinate, asparaginate, taurinate and lysinate; and a cation selected from:

$$[N(R^a)(R^b)(R^c)(R^d)]^+,$$

wherein: $R^a$, $R^b$, $R^c$ and $R^d$ are each independently selected from hydrogen, a $C_1$ to $C_8$, straight chain or branched alkyl group or a $C_3$ to $C_6$ cycloalkyl group, wherein said alkyl or cycloalkyl groups are unsubstituted or may be substituted by one to three groups selected from: $C_1$ to $C_4$ alkoxy, $C_2$ to $C_8$ alkoxyalkoxy, $C_3$ to $C_6$ cycloalkyl, -OH, -SH, - $CO_2(C_1$ to $C_6)$alkyl, -OC(O)($C_1$ to $C_6$)alkyl, or any two of $R^a$, $R^b$, $R^c$ and $R^d$ combine to form an alkylene chain $-(CH_2)_q-$ wherein q is from 3 to 6.

**22.** A composition according to Claim 21 wherein the basic anion is as defined in Claims 3 or 4; wherein the cation is as defined in Claim 5; and/or wherein the basic ionic liquid is choline lysinate.

**23.** A composition according to Claims 21 or 22 further comprising a base anion exchange resin; preferably wherein the base anion exchange resin comprises a styrene divinylbenzene copolymer.

**24.** A composition according to any of Claims 21 to 23, wherein the treated glyceride oil is selected from a treated vegetable oil preferably wherein the treated vegetable oil is selected from coconut oil, corn oil, cottonseed oil, groundnut oil, olive oil, palm oil, rapeseed oil, rice bran oil, safflower oil, soybean oil and sunflower oil, or mixtures thereof more preferably wherein the treated vegetable oil is a treated palm oil.

**Patentansprüche**

1. Verfahren zum Entfernen freier Fettsäuren aus Glyceridöl, das freie Fettsäuren enthält, umfassend die folgenden Schritte:

   (i) Inkontaktbringen des Glyceridöls, das freie Fettsäuren enthält, mit einer basischen ionischen Flüssigkeit; wobei die basische ionische Flüssigkeit ein basisches Anion aufweist, ausgewählt aus Hydroxid, Alkoxid, Alkylcarbonat, Hydrogencarbonat, Serinat, Prolinat, Histidinat, Threoninat, Valinat, Asparaginat, Taurinat und Lysinat; und ein Kation, ausgewählt aus:

   $[N(R^a)(R^b)(R^c)(R^d)]^+$,

   wobei: $R^a$, $R^b$, $R^c$ und $R^d$ jeweils unabhängig ausgewählt sind aus Wasserstoff, einer geradkettigen oder verzweigten $C_1$- bis $C_8$-Alkylgruppe oder einer $C_3$- bis $C_6$-Cycloalkylgruppe, wobei die genannten Alkyl- oder Cycloalkylgruppen unsubstituiert sind oder durch eine bis drei Gruppe(n) substituiert sein können, ausgewählt aus: $C_1$- bis $C_4$-Alkoxy, $C_2$- bis $C_8$-Alkoxyalkoxy, $C_3$- bis $C_6$-Cycloalkyl, -OH, -SH, $-CO_2(C_1$ bis $C_6)$Alkyl, und -OC(O) ($C_1$ bis $C_6$)Alkyl oder jedweden zwei von $R^a$, $R^b$, $R^c$ und $R^d$ zur Bildung einer Alkylenkette $-(CH_2)_q-$ kombiniert, wobei q von 3 bis 6 ist; und
   (ii) Erhalt eines behandelten Glyceridöls mit einem reduzierten Gehalt an freier Fettsäure im Vergleich zum Glyceridöleintrag von Schritt (i).

2. Verfahren nach Anspruch 1, weiter umfassend das Trennen von einem oder mehr Neutralisationssalz(en) von in Schritt (i) gebildeten freien Fettsäuren und/oder jedweder restlichen basischen ionischen Flüssigkeit aus dem behandelten Glyceridöl.

3. Verfahren nach Anspruch 1 oder Anspruch 2, wobei das basische Anion ausgewählt ist aus Alkylcarbonat, Hydrogencarbonat, Hydroxid und Alkoxid.

4. Verfahren nach Anspruch 1 oder Anspruch 2, wobei das basische Anion ausgewählt ist aus Serinat, Prolinat, Histidinat, Threoninat, Valinat, Asparaginat, Taurinat und Lysinat; wobei das basische Anion bevorzugt ausgewählt ist aus Serinat, Lysinat, Prolinat, Taurinat und Threoninat; wobei das basische Anion bevorzugter ausgewählt ist aus Lysinat, Prolinat und Serinat; und wobei das basische Anion am bevorzugtesten Lysinat ist.

5. Verfahren nach einem der Ansprüche 1 bis 4, wobei das Kation ausgewählt ist aus:

   $[N(R^a)(R^b)(R^c)(R^d)]^+$,

   wobei: $R^a$, $R^b$, $R^c$ und $R^d$ jeweils unabhängig ausgewählt sind aus $C_1$- bis $C_8$-Alkyl, einschließlich $C_1$-, $C_2$-, $C_4$- und $C_6$-Alkyl, wobei eines oder mehr von $R^a$, $R^b$, $R^c$ und $R^d$ gegebenenfalls durch eine bis drei Gruppe(n) wie in Anspruch 1 definiert substituiert sein können; wobei das Kation bevorzugt ausgewählt ist aus:

   $[N(R^a)(R^b)(R^c)(R^d)]^+$,

   wobei: $R^a$, $R^b$, $R^c$ und $R^d$ jeweils unabhängig ausgewählt sind aus $C_1$- bis $C_4$-Alkyl, einschließlich $C_1$-, $C_2$- und $C_4$-Alkyl, wobei mindestens eines von $R^a$, $R^b$, $R^c$ und $R^d$ durch eine einzelne -OH-Gruppe substituiert ist; am bevorzugtesten, wobei das Kation Cholin ist:

   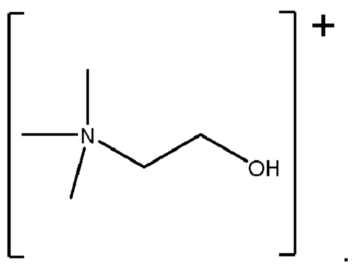

6. Verfahren nach einem der Ansprüche 1 bis 5, wobei die basische ionische Flüssigkeit in dem Glyceridöl nicht

mischbar und/oder in Wasser löslich ist.

**7.** Verfahren nach einem der Ansprüche 1 bis 6, wobei die basische ionische Flüssigkeit einen Schmelzpunkt von weniger als 150 °C aufweist.

**8.** Verfahren nach Anspruch 1 oder Anspruch 2, wobei die basische ionische Flüssigkeit Cholinbicarbonat

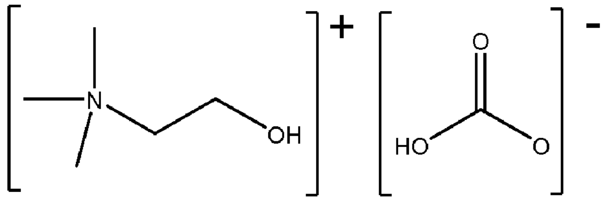

oder Cholinlysinat ist.

**9.** Verfahren nach einem der Ansprüche 1 bis 8, wobei die basische ionische Flüssigkeit geträgert ist; wobei der Träger bevorzugt ausgewählt ist aus Siliciumdioxid, Aluminiumoxid, Aluminiumoxid-Siliciumdioxid, Kohlenstoff, Aktivkohle oder einem Zeolithen; wobei der Träger bevorzugter Siliciumdioxid ist.

**10.** Verfahren nach Anspruch 9, wobei die basische ionische Flüssigkeit in einem Massenverhältnis von einer ionischen Flüssigkeit:Träger von 10:1 bis 1:10 an den Träger adsorbiert wird; wobei die basische ionische Flüssigkeit bevorzugt in einem Massenverhältnis von einer basischen ionischen Flüssigkeit:Träger von 1:2 bis 2:1 an den Träger adsorbiert wird.

**11.** Verfahren nach einem der Ansprüche 1 bis 10, wobei Schritt (i) bei einer Temperatur von Umgebungstemperatur bis 50 °C durchgeführt wird.

**12.** Verfahren nach einem der Ansprüche 1 bis 11, weiter umfassend das Regenerieren der basischen ionischen Flüssigkeit aus einem oder mehr Neutralisationssalzen von einer in Schritt (i) gebildeten freien Fettsäure und Isolieren aus dem behandelten Glyceridöl, mittels eines Regenerationsverfahrens; wobei die Regeneration bevorzugt die folgenden Schritte umfasst:

(a) Inkontaktbringen des Salzes von der freien Fettsäure (FFA) mit einer Säure, die einen niedrigeren pKa aufweist als die FFA aus der das Salz der FFA gebildet wurde;
(b) Erhalt eines in Schritt (a) gebildeten Salzprodukts, das nicht die Konjugatbase der FFA als ein Anion umfasst; und
(c) Durchführen eines Anionenaustauschschritts an dem Salzprodukt zum Erhalt einer basischen ionischen Flüssigkeit, umfassend das angestrebte basische Anion.

**13.** Verfahren nach Anspruch 5, wobei das Kation Cholin ist und das Verfahren weiter Folgendes umfasst: Bilden von Cholinbicarbonat aus einem oder mehr Neutralisationssalz(en) von einer in Schritt (i) gebildeten freien Fettsäure und Isolieren aus dem behandelten Glyceridöl, in einem Regenerationsverfahren, wobei die Regeneration die folgenden Schritte umfasst:

(a) Inkontaktbringen des Cholinsalzes von einer freien Fettsäure, wie zum Beispiel Cholinstearat mit Kohlensäure; und
(b) Erhalt von Cholinbicarbonat aus dem Reaktionsgemisch;

oder Bilden von Cholinhydroxid aus einem oder mehr Neutralisationssalz(en) von einer in Schritt (i) gebildeten freien Fettsäure und Isolieren aus dem behandelten Glyceridöl mittels eines Regenerationsverfahrens, wobei die Regeneration die folgenden Schritte umfasst:

(a) Durchführen einer Hydrierung des Cholinsalzes von einer freien Fettsäure, wie zum Beispiel Cholinstearat, bei Vorliegen eines geeigneten Katalysators;
(b) Trennen des in dem Hydrierungsschritt (a) gebildeten Cholinhydroxids.

**14.** Verfahren nach einem der Ansprüche 1 bis 13, wobei das Glyceridöl von Schritt (i) des Verfahrens ein Pflanzenöl ist; wobei das Pflanzenöl bevorzugt ausgewählt ist aus Kokosöl, Maisöl, Baumwollsamenöl, Erdnussöl, Olivenöl, Palmöl, Rapsöl, Reiskleieöl, Safloröl, Sojabohnenöl und Sonnenblumenöl oder Gemischen davon; wobei das Pflanzenöl bevorzugter Palmöl, wie zum Beispiel Rohpalmöl, ist.

**15.** Behandeltes Glyceridöl, erhalten durch das Verfahren nach Anspruch 5, wobei das Kation Cholin ist, das zwischen 0,1 Gew.-% und 25 Gew.-% eines auf Cholin basierenden Neutralisationssalzes oder eines behandelten Glyceridöls, erhalten mittels des Verfahrens nach Anspruch 4, umfassend zwischen 0,1 Gew.-% und 25 Gew.-% eines Anions, ausgewählt aus Serinat, Prolinat, Histidinat, Threoninat, Valinat, Asparaginat, Taurinat und Lysinat, umfasst.

**16.** Behandeltes Glyceridöl nach Anspruch 15, wobei das behandelte Glyceridöl ein behandeltes Pflanzenöl ist; wobei das behandelte Pflanzenöl bevorzugt ausgewählt ist aus Kokosöl, Maisöl, Baumwollsamenöl, Erdnussöl, Olivenöl, Palmöl, Rapsöl, Reiskleieöl, Safloröl, Sojabohnenöl und Sonnenblumenöl, oder Gemischen davon; wobei das behandelte Pflanzenöl bevorzugter ein behandeltes Palmöl ist.

**17.** Verfahren zur Verbesserung der Lagerstabilität eines behandelten Glyceridöls, umfassend das Zufügen eines behandelten Glyceridöls, enthaltend weniger als 2 Gew.-% freie Fettsäuren (FFA), einer basischen ionischen Flüssigkeit mit einem basischen Anion, ausgewählt aus Hydroxid, Alkoxid, Alkylcarbonat, Hydrogencarbonat, Serinat, Prolinat, Histidinat, Threoninat, Valinat, Asparaginat, Taurinat und Lysinat; und eines Kations, ausgewählt aus:

$$[N(R^a)(R^b)(R^c)(R^d)]^+,$$

wobei: $R^a$, $R^b$, $R^c$ und $R^d$ jeweils unabhängig ausgewählt sind aus Wasserstoff, einer geradkettigen oder verzweigten $C_1$- bis $C_8$-Alkylgruppe oder einer $C_3$- bis $C_6$-Cycloalkylgruppe, wobei die genannten Alkyl- oder Cycloalkylgruppen unsubstituiert sind oder durch eine bis drei Gruppe(n) substituiert sein können, ausgewählt aus: $C_1$- bis $C_4$-Alkoxy, $C_2$- bis $C_8$-Alkoxyalkoxy, $C_3$- bis
$C_6$-Cycloalkyl, -OH, -SH, $-CO_2(C_1$ bis $C_6)$Alkyl, -OC(O) $(C_1$ bis $C_6)$Alkyl oder jedweden zwei von $R^a$, $R^b$, $R^c$ und $R^d$ zur Bildung einer Alkylenkette $-(CH_2)_q-$ kombiniert, wobei q von 3 bis 6 ist.

**18.** Verfahren nach Anspruch 17, wobei das behandelte Glyceridöl weniger als 0,5 Gew.-% freie Fettsäuren (FFA) enthält; wobei das basische Anion wie in den Ansprüchen 3 oder 4 definiert ist; wobei das Kation wie in Anspruch 5 definiert ist; und/oder wobei die basische ionische Flüssigkeit Cholinlysinat ist.

**19.** Verfahren nach Anspruch 17 oder Anspruch 18, weiter umfassend das Zufügen eines basischen Anionenaustauschharzes zu dem behandelten Glyceridöl; wobei das basische Anionenaustauschharz bevorzugt ein Styrol-Divinylbenzol-Copolymer umfasst.

**20.** Verfahren nach einem der Ansprüche 17 bis 19, wobei das behandelte Glyceridöl ein behandeltes Pflanzenöl ist; wobei das behandelte Pflanzenöl bevorzugt ausgewählt ist aus Kokosöl, Maisöl, Baumwollsamenöl, Erdnussöl, Olivenöl, Palmöl, Rapsöl, Reiskleieöl, Safloröl, Sojabohnenöl und Sonnenblumenöl, oder Gemischen davon; wobei das behandelte Pflanzenöl bevorzugter ein behandeltes Palmöl ist.

**21.** Glyceridöl-Zusammensetzung, umfassend behandeltes Glyceridöl, enthaltend weniger als 2 Gew.-% freie Fettsäuren (FFA), bevorzugt weniger als 0,5 Gew.-% FFA, und eine basische ionische Flüssigkeit, bevorzugt in einer Menge zwischen 0,1 Gew.-% und 25 Gew.-%, mit einem basischen Anion, ausgewählt aus Hydroxid, Alkoxid, Alkylcarbonat, Hydrogencarbonat, Serinat, Prolinat, Histidinat, Threoninat, Valinat, Asparaginat, Taurinat und Lysinat; und ein Kation, ausgewählt aus:

$$[N(R^a)(R^b)(R^c)(R^d)]^+,$$

wobei: $R^a$, $R^b$, $R^c$ und $R^d$ jeweils unabhängig ausgewählt sind aus Wasserstoff, einer geradkettigen oder verzweigten $C_1$- bis $C_8$-Alkylgruppe oder einer $C_3$- bis $C_6$-Cycloalkylgruppe, wobei die genannten Alkyl- oder Cycloalkylgruppen unsubstituiert sind oder durch eine bis drei Gruppe(n) substituiert sein können, ausgewählt aus: $C_1$- bis $C_4$-Alkoxy, $C_2$- bis $C_8$-Alkoxyalkoxy, $C_3$- bis
$C_6$-Cycloalkyl, -OH, -SH, $-CO_2(C_1$ bis $C_6)$Alkyl und -OC(O) $(C_1$ bis $C_6)$Alkyl, oder jedweden zwei von $R^a$, $R^b$, $R^c$ und $R^d$ zur Bildung einer Alkylenkette $-(CH_2)_q-$ kombiniert, wobei q von 3 bis 6 ist.

**22.** Zusammensetzung nach Anspruch 21, wobei das basische Anion wie in den Ansprüchen 3 oder 4 definiert ist; wobei

das Kation wie in Anspruch 5 definiert ist; und/oder wobei die basische ionische Flüssigkeit Cholinlysinat ist.

**23.** Zusammensetzung nach den Ansprüchen 21 oder 22, weiter umfassend ein basisches Anionenaustauschharz, wobei das basische Anionenaustauschharz bevorzugt ein Styrol-Divinylbenzol-Copolymer umfasst.

**24.** Zusammensetzung nach einem der Ansprüche 21 bis 23, wobei das behandelte Glyceridöl aus einem behandelten Pflanzenöl ausgewählt ist, wobei das behandelte Pflanzenöl bevorzugt ausgewählt ist aus Kokosöl, Maisöl, Baumwollsamenöl, Erdnussöl, Olivenöl, Palmöl, Rapsöl, Reiskleieöl, Safloröl, Sojabohnenöl und Sonnenblumenöl, oder Gemischen davon, wobei das behandelte Pflanzenöl bevorzugter ein behandeltes Palmöl ist.

## Revendications

**1.** Procédé d'élimination d'acides gras libres d'une huile glycéridique contenant des acides gras libres, comprenant les étapes qui consistent à :

(i) mettre l'huile glycéridique contenant des acides gras libres en contact avec un liquide ionique basique ; le liquide ionique basique comportant un anion basique sélectionné parmi un hydroxyde, un alcoxyde, un alkylcarbonate, un hydrogénocarbonate, un sérinate, un prolinate, un histidinate, un thréoninate, un valinate, un asparaginate, un taurinate et un lysinate ; et un cation sélectionné parmi :

$$[N(R^a)(R^b)(R^c)(R^d)]^+,$$

où : $R^a$, $R^b$, $R^c$ et $R^d$ sont chacun sélectionné indépendamment parmi un atome d'hydrogène, un groupe alkyle $C_1$ à $C_8$ à chaîne linéaire ou ramifiée ou un groupe cycloalkyle $C_3$ à $C_6$, lesdits groupes alkyle ou cycloalkyle étant non substitués ou pouvant être substitués par un à trois groupes sélectionnés parmi : des groupes alcoxy $C_1$ à $C_4$, alcoxyalcoxy $C_2$ à $C_8$, cycloalkyle $C_3$ à $C_6$, -OH, -SH, - $CO_2$ (alkyle $C_1$ à $C_6$), et -OC(O) (alkyle $C_1$ à $C_6$), ou deux quelconques de $R^a$, $R^b$, $R^c$ et $R^d$ se combinent pour former une chaîne alkylène $-(CH_2)_q-$ où q vaut de 3 à 6 ; et
(ii) obtenir une huile glycéridique traitée ayant une teneur réduite en acides gras libres par rapport à l'alimentation d'huile glycéridique de l'étape (i).

**2.** Procédé selon la revendication 1, comprenant en outre la séparation d'un ou plusieurs sels de neutralisation d'acides gras libres formés à l'étape (i) et/ou de tout liquide ionique basique résiduel de l'huile glycéridique traitée.

**3.** Procédé selon la revendication 1 ou la revendication 2, dans lequel l'anion basique est sélectionné parmi un alkylcarbonate, un hydrogénocarbonate, un hydroxyde et un alcoxyde.

**4.** Procédé selon la revendication 1 ou la revendication 2, dans lequel l'anion basique est sélectionné parmi un sérinate, un prolinate, un histidinate, un thréoninate, un valinate, un asparaginate, un taurinate et un lysinate ; préférablement dans lequel l'anion basique est sélectionné parmi un sérinate, un lysinate, un prolinate, un taurinate et un thréoninate ; plus préférablement dans lequel l'anion basique est sélectionné parmi un lysinate, un prolinate et un sérinate ; et idéalement dans lequel l'anion basique est un lysinate.

**5.** Procédé selon l'une quelconque des revendications 1 à 4, dans lequel le cation est sélectionné parmi :

$$[N(R^a)(R^b)(R^c)(R^d)]^+,$$

où : $R^a$, $R^b$, $R^c$ et $R^d$ sont chacun sélectionné indépendamment parmi un groupe alkyle $C_1$ à $C_8$, y compris un groupe alkyle $C_1$, $C_2$, $C_4$ et $C_6$, un ou plusieurs de $R^a$, $R^b$, $R^c$ et $R^d$ pouvant éventuellement être substitués par un à trois groupes tels que définis dans la revendication 1 ; préférablement dans lequel le cation est sélectionné parmi :

$$[N(R^a)(R^b)(R^c)(R^d)]^+,$$

où : $R^a$, $R^b$, $R^c$ et $R^d$ sont chacun sélectionné indépendamment parmi un groupe alkyle $C_1$ à $C_4$, y compris un groupe alkyle $C_1$, $C_2$ et $C_4$, au moins un de $R^a$, $R^b$, $R^c$ et $R^d$ étant substitué par un seul groupe -OH ; idéalement dans lequel le cation est la choline :

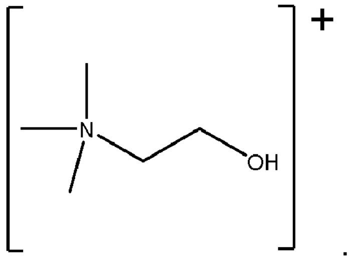

6. Procédé selon l'une quelconque des revendications 1 à 5, dans lequel le liquide ionique basique est immiscible dans l'huile glycéridique et/ou soluble dans l'eau.

7. Procédé selon l'une quelconque des revendications 1 à 6, dans lequel le liquide ionique basique a un point de fusion inférieur à 150 °C.

8. Procédé selon la revendication 1 ou la revendication 2, dans lequel le liquide ionique basique est le bicarbonate de choline :

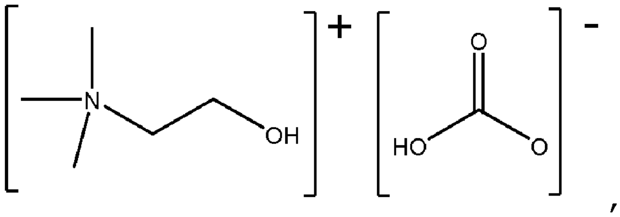

ou le lysinate de choline.

9. Procédé selon l'une quelconque des revendications 1 à 8, dans lequel le liquide ionique basique est présent sur un support ; préférablement dans lequel le support est sélectionné parmi la silice, l'alumine, l'alumine-silice, le charbon, le charbon actif ou une zéolite ; plus préférablement dans lequel le support est la silice.

10. Procédé selon la revendication 9, dans lequel le liquide ionique basique est adsorbé sur le support selon un rapport massique liquide ionique:support de 10:1 à 1:10 ; préférablement dans lequel le liquide ionique basique est adsorbé sur le support selon un rapport massique liquide ionique:support de 1:2 à 2:1.

11. Procédé selon l'une quelconque des revendications 1 à 10, dans lequel l'étape (i) est effectuée à une température de la température ambiante à 50 °C.

12. Procédé selon l'une quelconque des revendications 1 à 11, comprenant en outre la régénération du liquide ionique basique à partir d'un ou plusieurs sels de neutralisation d'un acide gras libre formés à l'étape (i) et isolés de l'huile glycéridique traitée, au moyen d'un procédé de régénération ; préférablement dans lequel la régénération comprend les étapes qui consistent à :

(a) mettre le sel de l'acide gras libre (AGL) en contact avec un acide qui a une valeur pKa inférieure à celle de l'AGL à partir duquel le sel de l'AGL a été formé ;
(b) obtenir un produit de type sel formé à l'étape (a) qui ne comprend pas la base conjuguée de l'AGL comme anion ; et
(c) effectuer une étape d'échange d'anions sur le produit de type sel pour obtenir un liquide ionique basique comprenant l'anion basique désiré.

13. Procédé selon la revendication 5, dans lequel le cation est la choline et le procédé comprend en outre : la formation de bicarbonate de choline à partir d'un ou plusieurs sels de neutralisation d'un acide gras libre, formés à l'étape (i) et isolés de l'huile glycéridique traitée, dans un procédé de régénération, la régénération comprenant les étapes qui consistent à :

(a) mettre le sel de choline d'un acide gras libre, tel que le stéarate de choline, en contact avec de l'acide

carbonique ; et

(b) obtenir du bicarbonate de choline à partir du mélange réactionnel ;

ou former de l'hydroxyde de choline à partir d'un ou plusieurs sels de neutralisation d'un acide gras libre, formés à l'étape (i) et isolés de l'huile glycéridique traitée, au moyen d'un procédé de régénération, la régénération comprenant les étapes qui consistent à :

(a) effectuer une hydrogénation du sel de choline d'un acide gras libre, tel que le stéarate de choline, en présence d'un catalyseur approprié ;

(b) séparer l'hydroxyde de choline formé durant l'étape d'hydrogénation (a).

**14.** Procédé selon l'une quelconque des revendications 1 à 13, dans lequel l'huile glycéridique issue de l'étape (i) du procédé est une huile végétale ; préférablement dans lequel l'huile végétale est sélectionnée parmi l'huile de noix de coco, l'huile de maïs, l'huile de coton, l'huile d'arachide, l'huile d'olive, l'huile de palme, l'huile de colza, l'huile de son de riz, l'huile de carthame, l'huile de soja et l'huile de tournesol, ou des mélanges de celles-ci ; plus préférablement dans lequel l'huile végétale est de l'huile de palme, telle que l'huile de palme brute.

**15.** Huile glycéridique traitée obtenue par le procédé selon la revendication 5, dans laquelle le cation est la choline, comprenant de 0,1 à 25 % en poids d'un sel de neutralisation à base de choline, ou huile glycéridique traitée obtenue par le procédé selon la revendication 4, comprenant de 0,1 à 25 % en poids d'un anion sélectionné parmi un sérinate, un prolinate, un histidinate, un thréoninate, un valinate, un asparaginate, un taurinate et un lysinate.

**16.** Huile glycéridique traitée selon la revendication 15, l'huile glycéridique traitée étant une huile végétale traitée ; préférablement dans laquelle l'huile végétale traitée est sélectionnée parmi l'huile de noix de coco, l'huile de maïs, l'huile de coton, l'huile d'arachide, l'huile d'olive, l'huile de palme, l'huile de colza, l'huile de son de riz, l'huile de carthame, l'huile de soja et l'huile de tournesol, ou des mélanges de celles-ci ; plus préférablement dans laquelle l'huile végétale traitée est une huile de palme traitée.

**17.** Procédé d'amélioration de la stabilité au stockage d'une huile glycéridique traitée, comprenant l'addition, à une huile glycéridique traitée contenant moins de 2 % en poids d'acides gras libres (AGL), d'un liquide ionique basique comportant un anion basique sélectionné parmi un hydroxyde, un alcoxyde, un alkylcarbonate, un hydrogénocarbonate, un sérinate, un prolinate, un histidinate, un thréoninate, un valinate, un asparaginate, un taurinate et un lysinate ; et un cation sélectionné parmi :

$$[N(R^a)(R^b)(R^c)(R^d)]^+,$$

où : $R^a$, $R^b$, $R^c$ et $R^d$ sont chacun sélectionné indépendamment parmi un atome d'hydrogène, un groupe alkyle $C_1$ à $C_8$ à chaîne linéaire ou ramifiée ou un groupe cycloalkyle $C_3$ à $C_6$, lesdits groupes alkyle ou cycloalkyle étant non substitués ou pouvant être substitués par un à trois groupes sélectionnés parmi : des groupes alcoxy $C_1$ à $C_4$, alcoxyalcoxy $C_2$ à $C_8$, cycloalkyle $C_3$ à $C_6$, -OH, -SH, - $CO_2$ (alkyle $C_1$ à $C_6$), et -OC (O) (alkyle $C_1$ à $C_6$), ou deux quelconques de $R^a$, $R^b$, $R^c$ et $R^d$ se combinent pour former une chaîne alkylène $-(CH_2)_q-$ où q vaut de 3 à 6.

**18.** Procédé selon la revendication 17, dans lequel l'huile glycéridique traitée contient moins de 0,5 % en poids d'AGL ; dans lequel l'anion basique est tel que défini dans les revendications 3 ou 4 ; dans lequel le cation est tel que défini dans la revendication 5 ; et/ou dans lequel le liquide ionique basique est le lysinate de choline.

**19.** Procédé selon la revendication 17 ou la revendication 18, comprenant en outre l'addition d'une résine échangeuse d'anions basiques à l'huile glycéridique traitée ; préférablement dans lequel la résine échangeuse d'anions basiques comprend un copolymère de styrène-divinylbenzène.

**20.** Procédé selon l'une quelconque des revendications 17 à 19, dans lequel l'huile glycéridique traitée est une huile végétale traitée ; préférablement dans lequel l'huile végétale traitée est sélectionnée parmi l'huile de noix de coco, l'huile de maïs, l'huile de coton, l'huile d'arachide, l'huile d'olive, l'huile de palme, l'huile de colza, l'huile de son de riz, l'huile de carthame, l'huile de soja et l'huile de tournesol, ou des mélanges de celles-ci ; plus préférablement dans lequel l'huile végétale traitée est une huile de palme traitée.

**21.** Composition d'huile glycéridique comprenant une huile glycéridique traitée contenant moins de 2 % en poids d'acides gras libres (AGL), préférablement moins de 0,5 % en poids d'AGL, et un liquide ionique basique, préférablement

dans une quantité de 0,1 à 25 % en poids, comportant un anion basique sélectionné parmi un hydroxyde, un alcoxyde, un alkylcarbonate, un hydrogénocarbonate, un sérinate, un prolinate, un histidinate, un thréoninate, un valinate, un asparaginate, un taurinate et un lysinate ; et un cation sélectionné parmi :

$$[N(R^a)(R^b)(R^c)(R^d)]^+,$$

où : $R^a$, $R^b$, $R^c$ et $R^d$ sont chacun sélectionné indépendamment parmi un atome d'hydrogène, un groupe alkyle $C_1$ à $C_8$ à chaîne linéaire ou ramifiée ou un groupe cycloalkyle $C_3$ à $C_6$, lesdits groupes alkyle ou cycloalkyle étant non substitués ou pouvant être substitués par un à trois groupes sélectionnés parmi : des groupes alcoxy $C_1$ à $C_4$, alcoxyalcoxy $C_2$ à $C_a$, cycloalkyle $C_3$ à $C_6$, -OH, -SH,-$CO_2$ (alkyle $C_1$ à $C_6$), et -OC (O) (alkyle $C_1$ à $C_6$), ou deux quelconques de $R^a$, $R^b$, $R^c$ et $R^d$ se combinent pour former une chaîne alkylène $-(CH_2)_q-$ où q vaut de 3 à 6.

**22.** Composition selon la revendication 21, dans laquelle l'anion basique est tel que défini dans les revendications 3 ou 4 ; dans laquelle le cation est tel que défini dans la revendication 5 ; et/ou dans laquelle le liquide ionique basique est le lysinate de choline.

**23.** Composition selon les revendications 21 ou 22, comprenant en outre une résine échangeuse d'anions basiques ; préférablement dans laquelle la résine échangeuse d'anions basiques comprend un copolymère de styrène-divinylbenzène.

**24.** Composition selon l'une quelconque des revendications 21 à 23, dans laquelle l'huile glycéridique traitée est sélectionnée parmi une huile végétale traitée, préférablement dans laquelle l'huile végétale traitée est sélectionnée parmi l'huile de noix de coco, l'huile de maïs, l'huile de coton, l'huile d'arachide, l'huile d'olive, l'huile de palme, l'huile de colza, l'huile de son de riz, l'huile de carthame, l'huile de soja et l'huile de tournesol, ou des mélanges de celles-ci ; plus préférablement dans laquelle l'huile végétale traitée est une huile de palme traitée.

FIG. 1:

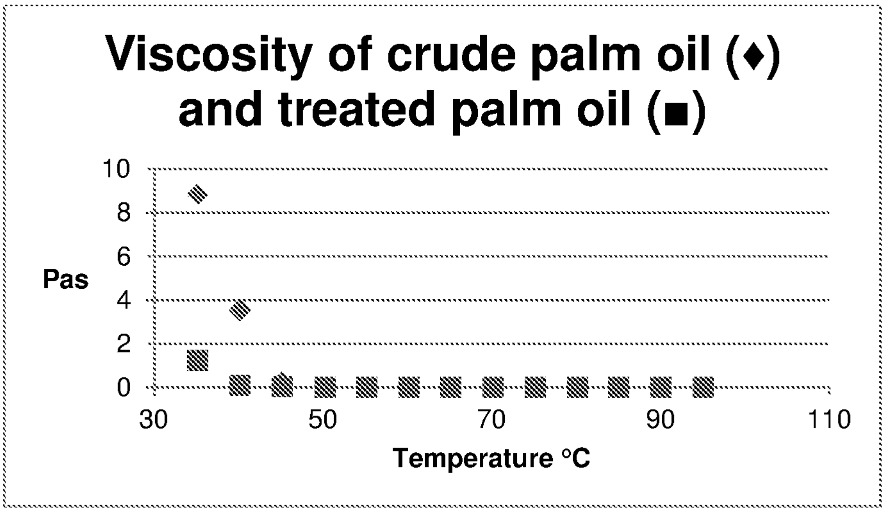
Viscosity of crude palm oil (♦) and treated palm oil (■)
Pas
10
8
6
4
2
0
30
50
70
90
110
Temperature °C

FIG. 2:

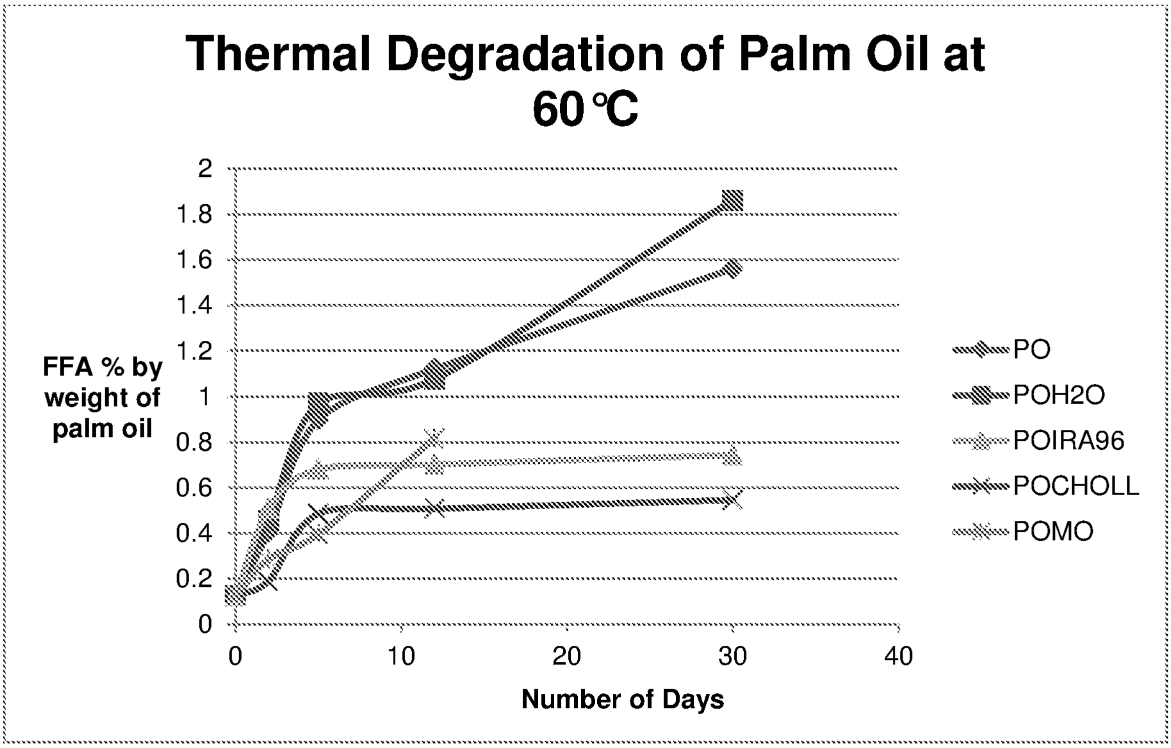
Thermal Degradation of Palm Oil at 60 ℃
FFA % by weight of palm oil
2
1.8
1.6
1.4
1.2
1
0.8
0.6
0.4
0.2
0
0
10
20
30
40
Number of Days
PO
POH2O
POIRA96
POCHOLL
POMO

FIG. 3:

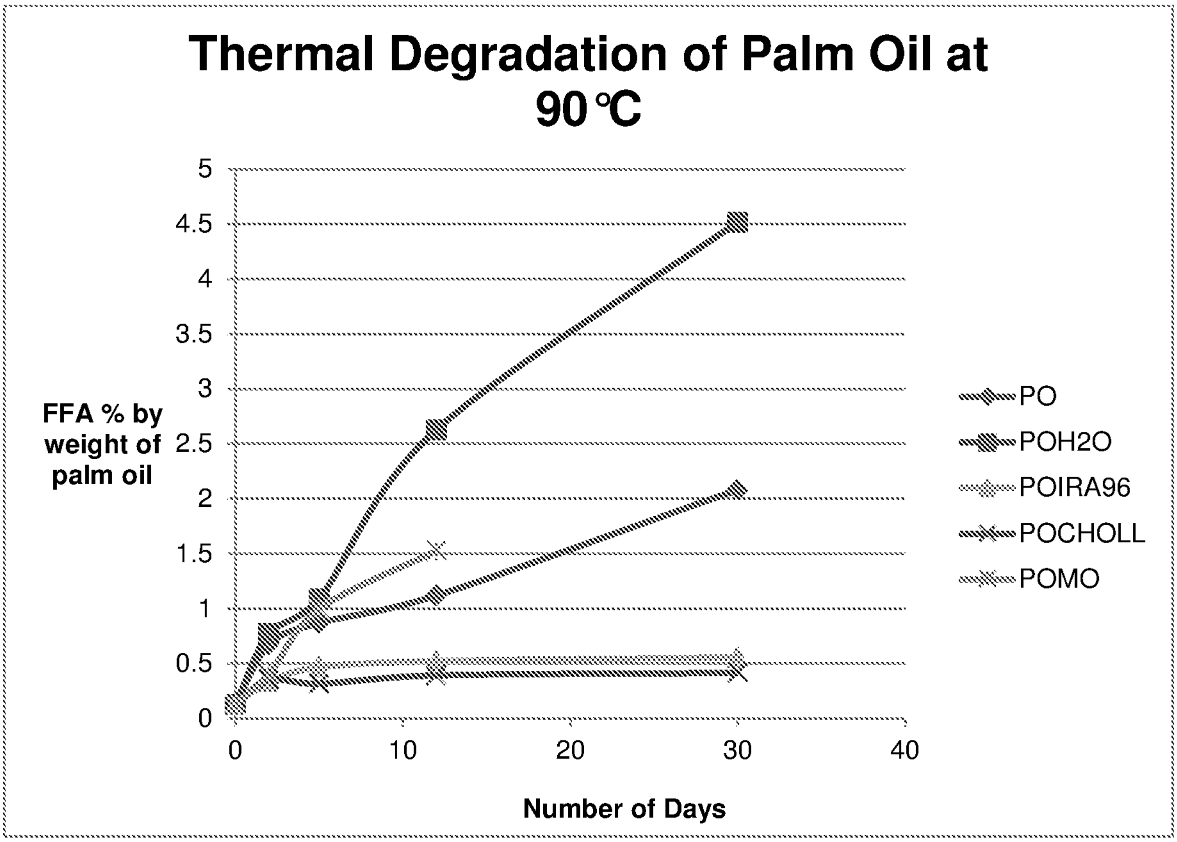
Thermal Degradation of Palm Oil at 90°C
FFA % by weight of palm oil
5
4.5
4
3.5
3
2.5
2
1.5
1
0.5
0
0
10
20
30
40
Number of Days
PO
POH2O
POIRA96
POCHOLL
POMO

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1911829 A
- WO 2010136783 A
- WO 2012069832 A
- US 20020169071 A
- US 20020198100 A
- US 20080306319 A
- US 4959158 A
- US 5571070 A
- US 5591340 A
- US 5762800 A
- WO 9912650 A
- WO 0029120 A


### Non-patent literature cited in the description


- **ABD EL-SALAM et al.** *J Food Process Technol,* 2011
- **MEIRELLES et al.** *Recent Patents on Engineering,* 2007, vol. 1, 95-102
- **S.-I.ISHIGURO et al.** *Pure Appl. Chem.,* 2010, vol. 82 (10), 1927-1941
- **MANIC, M. S. et al.** *AIChE Journal,* May 2011, vol. 57 (5), 1344-1355